# EUROPEAN PATENT APPLICATION

(11) **EP 3 978 546 A1**
(43) Date of publication of application: **06.04.2022**
(21) Application number: 20815399.9
(22) Date of filing: 14.05.2020
(51) Int. Cl.: C08G 65/336, C09D 5/16, C09D 171/00, C09K 3/18, C09D 7/61, C09D 7/63

(54) **SURFACE TREATING AGENT**

(30) Priority: 29.05.2019 JP 2019099993
(71) Applicant: DAIKIN INDUSTRIES, LTD., Osaka-shi, Osaka 530-8323 (JP)
(72) Inventor: MARUHASHI, Kazuki, Osaka-shi, Osaka 530-8323 (JP); OZAWA, Kaori, Osaka-shi, Osaka 530-8323 (JP); MITSUHASHI, Hisashi, Osaka-shi, Osaka 530-8323 (JP)
(74) Representative: Hoffmann Eitle
(86) International application number: PCT/JP2020/019291
(87) International publication number: WO 2020/241282

(57) **Abstract**

1. A surface-treating agent comprising at least one fluoropolyether group-containing compound of the following formula (1) or (2) a chlorine ion, wherein a chlorine ion concentration in the surface-treating agent is 0.1 ppm by mass or more and 1.0 ppm by mass or less.

R^{F1}_{α} - X^{A} - R^{Si}_{β} (1)

R^{Si}_{γ} - X^{A} - R^{F2}- X^{A} - R^{Si}_{γ} (2)

## Description

### Technical Field

The present disclosure relates to a surface-treating agent.

### Background Art

Certain types of fluorine-containing silane compounds are known to be capable of providing excellent water-repellency, oil-repellency, antifouling properties, and the like when used in surface treatment of a base material. A layer obtained from a surface-treating agent containing a fluorine-containing silane compound (hereinafter, also referred to as a "surface-treating layer") is applied as a so-called functional thin film to a large variety of base materials such as glass, plastics, fibers, and building materials.

A known such fluorine-containing compound is a perfluoropolyether group-containing silane compound having a perfluoropolyether group in the molecular backbone and a hydrolyzable group bonding to a Si atom at the molecular end or in the end (Patent Literatures 1 and 2).

### Prior Art Literature

### Patent Literature

Patent Literature 1: JP 2014-218639 A
Patent Literature 2: JP 2017-082194 A

### Summary of Invention

### Technical Problem

Layers obtained from surface-treating agents containing a perfluoropolyether group-containing silane compound are suitably used for glasses and optical members such as touch panels which are required to have light permeability and transparency because the layers can exhibit functions such as water-repellency, oil-repellency and an antifouling property even when they are thin films. In particular, in these applications, friction durability is required so that such functions can be maintained even if the layers are repeatedly subjected to friction.

An object of the present disclosure is to provide a surface-treating agent comprising comprises a fluoro(poly)ether group-containing silane compound which is capable of forming a layer having high friction durability.

### Solution to Problem

The present disclosure includes the following embodiments.
[1] A surface-treating agent comprising at least one fluoropolyether group-containing compound of the following formula (1) or (2):

   R^{F1}_{α}-X^{A}-R^{Si}_{β} (1)

   R^{Si}_{γ}-X^{A}-R^{F2}-X^{A}-R^{Si}_{γ} (2)

   wherein
   R^{F1} is each independently at each occurrence Rf¹-R^{F}-O_{q}-;
   R^{F2} is -Rf²ₚ-R^{F}-O_{q}-;
   R^{f1} is each independently at each occurrence a C₁₋₁₆ alkyl group optionally substituted with one or more fluorine atoms;
   Rf² is a C₁₋₆ alkylene group optionally substituted with one or more fluorine atoms;
   R^{F} is each independently at each occurrence a divalent fluoropolyether group;
   p is 0 or 1;
   q is each independently at each occurrence 0 or 1;
   R^{Si} is each independently at each occurrence a monovalent group containing a Si atom to which a hydroxyl group, a hydrolyzable group, a hydrogen atom or a monovalent organic group is bonded;
   at least one R^{Si} is a monovalent group containing a Si atom to which a hydroxyl group or a hydrolyzable group is bonded;
   X^{A} is each independently a single bond or a di- to decavalent organic group;
   α is an integer of 1 to 9;
   β is an integer of 1 to 9; and
   γ is each independently an integer of 1 to 9, and a chlorine ion,
   wherein a chlorine ion concentration in the surface-treating agent is 0.1 ppm by mass or more and 1.0 ppm by mass or less.
[2] The surface-treating agent according to [1], wherein Rf¹ is each independently at each occurrence a C₁₋₁₆ perfluoroalkyl group.
[3] The surface-treating agent according to [1] or [2], wherein Rf² is each independently at each occurrence a C₁₋₆ perfluoroalkylene group.
[4] The surface-treating agent according to any one of [1] to [3], wherein R^{F} is each independently at each occurrence a group represented by the formula:

   -(OC₆F₁₂)ₐ-(OC₅F₁₀)_{b}-(OC₄F₈)c-(OC₃R^{Fa}₆)_{d}-(OC₂F₄)ₑ-(OCF₂)_{f}-

   wherein R^{Fa} is each independently at each occurrence a hydrogen atom, a fluorine atom or a chlorine atom; and
   a, b, c, d, e and f are each independently an integer of 0 to 200, the sum of a, b, c, d, e and f is 1 or more, and the occurrence order of the respective repeating units enclosed in parentheses provided with a, b, c, d, e or f is not limited in the formula.
[5] The surface-treating agent according to [4], wherein R^{Fa} is a fluorine atom.
[6] The surface-treating agent according to any one of [1] to [5], wherein R^{F} is each independently at each occurrence a group of the following formula (f1), (f2), (f3), (f4) or (f5) :

   -(OC₃F₆)_{d}- (f1):

   wherein d is an integer of 1 to 200,

      -(OC₄F₈)_{c}-(OC₃F₆)_{d}-(OC₂F₄)ₑ-(OCF₂)_{f}- (f2):
   wherein c and d are each independently an integer of 0 to 30;
      e and f are each independently an integer of 1 to 200;
      the sum of c, d, e, and f is an integer of 10 to 200; and
      the occurrence order of the respective repeating units enclosed in parentheses accompanied by a subscript c, d, e, or f is not limited in the formula,

         -(R⁶-R⁷)_{g}- (f3):
   wherein R⁶ is OCF₂ or OC₂F₄;
      R⁷ is a group selected from OC₂F₄, OC₃F₆, OC₄F₈, OC₅F₁₀, and OC₆F₁₂, or is a combination of two or three groups selected from these groups; and
      g is an integer of 2 to 100,

         -(OC₆F₁₂)ₐ-(OC₅F₁₀)_{b}-(OC₄F₈)_{c}-(OC₃F₆)_{d}-(OC₂F₄)ₑ-(OCF₂)_{f}- (f4) :
   wherein e is an integer of 1 or more and 200 or less, a, b, c, d, and f are each independently an integer of 0 or more and 200 or less, the sum of a, b, c, d, e, and f is at least 1, and the occurrence order of the respective repeating units enclosed in parentheses provided with a, b, c, d, e or f is not limited in the formula, or

      -(OC₆Fi₂)ₐ-(OC₅F₁₀)_{b}-(OC₄F₈)_{c}-(OC₃F₆)_{d}-(OC₂F₄)ₑ-(OCF₂)_{f}- (f5) :
   wherein f is an integer of 1 or more and 200 or less, a, b, c, d, and e are each independently an integer of 0 or more and 200 or less, the sum of a, b, c, d, e, and f is at least 1, and the occurrence order of the respective repeating units enclosed in parentheses provided with a, b, c, d, e, or f is not limited in the formula.
[7] The surface-treating agent according to any one of [1] to [6], wherein R^{Si} is a group of the following formula (S1), (S2), (S3) or (S4):

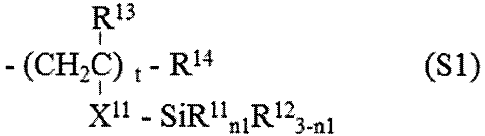

   -SiR¹¹ₙ₁R¹² ₃₋ₙ₁ (S2)

   -SiR^{a1}ₖ₁R^{b1}₁₁R^{c1}ₘ₁ (S3)

   -CR^{d1}ₖ₂R^{e1}₁₂R^{f1}ₘ₂ (S4)

   wherein
   R¹¹ is each independently at each occurrence a hydroxyl group or a hydrolyzable group;
   R¹² is each independently at each occurrence a hydrogen atom or a monovalent organic group;
   n1 is each independently an integer of 0 to 3 for each (SiR¹¹ₙ₁R¹² ₃₋ₙ₁) unit;
   X¹¹ is each independently at each occurrence a single bond or a divalent organic group;
   R¹³ is each independently at each occurrence a hydrogen atom or a monovalent organic group;
   t is each independently at each occurrence an integer of 2 to 10;
   R¹⁴ is each independently at each occurrence a hydrogen atom or a halogen atom;
   R^{a1} is each independently at each occurrence -Z¹-SiR²¹ₚ₁R²²_{q1}R²³ᵣ₁ ;
   Z¹ is each independently at each occurrence an oxygen atom or a divalent organic group;
   R²¹ is each independently at each occurrence -Z^{1'}-SiR^{21'}_{p1'}R^{22'}_{q1'}R^{23'}_{r1'} ;
   R²² is each independently at each occurrence a hydroxyl group or a hydrolyzable group;
   R²³ is each independently at each occurrence a hydrogen atom or a monovalent organic group;
   p1 is each independently at each occurrence an integer of 0 to 3;
   q1 is each independently at each occurrence an integer of 0 to 3;
   r1 is each independently at each occurrence an integer of 0 to 3;
   Z^{1'} is each independently at each occurrence an oxygen atom or a divalent organic group;
   R^{21'} is each independently at each occurrence -Z^{1"}-SiR^{22"}_{q1"}R^{23"}_{r1"};
   R^{22'} is each independently at each occurrence a hydroxyl group or a hydrolyzable group;
   R^{23'} is each independently at each occurrence a hydrogen atom or a monovalent organic group;
   p1' is each independently at each occurrence an integer of 0 to 3;
   q1' is each independently at each occurrence an integer of 0 to 3;
   r1' is each independently at each occurrence an integer of 0 to 3;
   Z^{1"} is each independently at each occurrence an oxygen atom or a divalent organic group;
   R^{22"} is each independently at each occurrence a hydroxyl group or a hydrolyzable group;
   R^{23"} is each independently at each occurrence a hydrogen atom or a monovalent organic group;
   q1" is each independently at each occurrence an integer of 0 to 3;
   r1" is each independently at each occurrence an integer of 0 to 3;
   R^{b1} is each independently at each occurrence a hydroxyl group or a hydrolyzable group;
   R^{c1} is each independently at each occurrence a hydrogen atom or a monovalent organic group;
   k1 is each independently at each occurrence an integer of 0 to 3;
   11 is each independently at each occurrence an integer of 0 to 3;
   m1 is each independently at each occurrence an integer of 0 to 3;
   R^{d1} is each independently at each occurrence -Z²-CR³¹ₚ₂R³²_{q2}R³³ᵣ₂ ;
   Z² is each independently at each occurrence a single bond, an oxygen atom or a divalent organic group;
   R³¹ is each independently at each occurrence -Z^{2'}-CR³²-_{q2'}R^{33'}_{r2'} ;
   R³² is each independently at each occurrence -Z³-SiR³⁴ₙ₂R³⁵₃₋ₙ₂;
   R³³ is each independently at each occurrence a hydrogen atom, a hydroxyl group, or a monovalent organic group;
   p2 is each independently at each occurrence an integer of 0 to 3;
   q2 is each independently at each occurrence an integer of 0 to 3;
   r2 is each independently at each occurrence an integer of 0 to 3;
   Z^{2'} is each independently at each occurrence a single bond, an oxygen atom or a divalent organic group;
   R^{32'} is each independently at each occurrence -Z³-SiR³⁴ₙ₂R³⁵₃₋ₙ₂ ;
   R^{33'} is each independently at each occurrence a hydrogen atom, a hydroxyl group, or a monovalent organic group;
   q2' is each independently at each occurrence an integer of 0 to 3;
   r2' is each independently at each occurrence an integer of 0 to 3;
   Z³ is each independently at each occurrence a single bond, an oxygen atom or a divalent organic group;
   R³⁴ is each independently at each occurrence a hydroxyl group or a hydrolyzable group;
   R³⁵ is each independently at each occurrence a hydrogen atom or a monovalent organic group;
   n2 is each independently at each occurrence an integer of 0 to 3;
   R^{e1} is each independently at each occurrence -Z³-SiR³⁴ₙ₂R³⁵₃₋ₙ₂ ;
   Rf¹ is each independently at each occurrence a hydrogen atom, a hydroxyl group, or a monovalent organic group;
   k2 is each independently at each occurrence an integer of 0 to 3;
   12 is each independently at each occurrence an integer of 0 to 3; and
   m2 is each independently at each occurrence an integer of 0 to 3.
[8] The surface-treating agent according to any one of [1] to [7], wherein each of α, β and γ is 1.
[9] The surface-treating agent according to any one of [1] to [7], wherein X^{A} is each independently a trivalent organic group,
   α is 1 and β is 2 or α is 2 and β is 1, and
   γ is 2.
[10] The surface-treating agent according to any one of [1] to [9], wherein the chlorine ion concentration in the surface-treating agent is 0.2 to 0.8 ppm by mass.
[11] The surface-treating agent according to any one of [1] to [10], further comprising one or more other component selected from fluorine-containing oil, silicone oil and a catalyst.
[12] The surface-treating agent according to any one of [1] to [11], further comprising a solvent.
[13] The surface-treating agent according to any one of [1] to [12], which is used as an antifouling coating agent or a water-proof coating agent.
[14] The surface-treating agent according to any one of [1] to [13], which is used for vacuum deposition.
[15] A pellet comprising the surface-treating agent according to any one of [1] to [14].
[16] An article comprising a base material and a layer which is formed on a surface of the base material from the surface-treating agent according to any one of [1] to [14].
[17] The article according to [16], which is an optical member.

### Advantageous Effect of Invention

The surface-treating agent of the present disclosure, in which the chlorine ion concentration is in the range of 0.1 ppm by mass or more and 1.0 ppm by mass or less, is capable of forming a surface-treating layer excellent in friction durability.

### Description of Embodiments

The "monovalent organic group", as used herein, means a monovalent group containing a carbon. The monovalent organic group is not limited, and may be a hydrocarbon group or a derivative thereof. The derivative of the hydrocarbon group is a group having one or more N atoms, O atoms, S atoms, Si atoms, amide groups, sulfonyl groups, siloxane groups, carbonyl groups, carbonyloxy groups and the like at the end or in the molecular chain of the hydrocarbon group. The simple term "organic group" means a monovalent organic group. The term "di- to decavalent organic group" means a di- to decavalent group containing a carbon. The di- to decavalent organic group may be, but is not limited to, a di- to decavalent group obtained by further removing 1 to 9 hydrogen atoms from an organic group. The divalent organic group is not limited, and examples thereof include divalent groups obtained by further removing one hydrogen atom from an organic group.

The term "hydrocarbon group", as used herein, means a group that contains a carbon and a hydrogen and that is obtained by removing one hydrogen atom from a hydrocarbon. The hydrocarbon group is not limited, and examples thereof include C₁₋₂₀ hydrocarbon groups such as aliphatic hydrocarbon groups and aromatic hydrocarbon groups, which are optionally substituted with one or more substituents. The "aliphatic hydrocarbon group" may be linear, branched or cyclic, and may be saturated or unsaturated. The hydrocarbon group may contain one or more ring structures.

The substituent of the "hydrocarbon group", as used herein, is not limited, and examples thereof include one or more groups selected from a halogen atom, and a C₁₋₆ alkyl group, a C₂₋₆ alkenyl group, a C₂₋₆ alkynyl group, a C₃₋₁₀ cycloalkyl group, a C₃₋₁₀ unsaturated cycloalkyl group, a 5 to 10-membered heterocyclyl group, a 5 to 10-membered unsaturated heterocyclyl group, a C₆₋₁₀ aryl group, and a 5 to 10-membered heteroaryl group each optionally substituted with one or more halogen atoms.

The term "hydrolyzable group", as used herein, means a group which is able to undergo a hydrolysis reaction, i.e., means a group that can be removed from the main backbone of a compound by a hydrolysis reaction. Examples of the hydrolyzable group include -OR^{h}, -OCOR^{h}, -O-N=CR^{h}₂, -NR^{h}₂,-NHR^{h} and halogens (wherein R^{h} represents a substituted or unsubstituted C₁₋₄ alkyl group).

The surface-treating agent of the present disclosure comprises at least one fluoropolyether group containing compound of the following formula (1) or (2):

R^{Fl}_{α}-X^{A}-R^{Si}_{β} (1)

R^{Si}_{γ}- X^{A}-R^{F2}-X^{A}-R^{Si}_{γ} (2)

, and the surface-treating agent has a chlorine ion concentration of 0.1 ppm by mass or more and 1.0 ppm by mass or less.

In the formula (1), R^{F1} is each independently at each occurrence Rf¹-R^{F}-O_{q}-.

In the formula (2), R^{F2} is -Rf²ₚ-R^{F}-O_{q}-.

In the formula, R^{f1} is each independently at each occurrence a C₁₋₁₆ alkyl group optionally substituted with one or more fluorine atoms.

The "C₁₋₁₆ alkyl group" in the C₁₋₁₆ alkyl group optionally substituted with one or more fluorine atoms may be linear or branched, and is preferably a linear or branched C₁₋₆ alkyl group, particularly C₁₋₃ alkyl group, more preferably a linear C₁₋₆ alkyl group, particularly C₁₋₃ alkyl group.

Rf¹ is preferably a C₁₋₁₆ alkyl group substituted with one or more fluorine atoms, more preferably a CF₂H-C₁₋₁₅ perfluoroalkylene group, still more preferably a C₁₋₁₆ perfluoroalkyl group.

The C₁₋₁₆ perfluoroalkyl group may be linear or branched, and is preferably a linear or branched C₁₋₆ perfluoroalkyl group, particularly C₁₋₃ perfluoroalkyl group, more preferably a linear C₁₋₆ perfluoroalkyl group, particularly C₁₋₃ perfluoroalkyl group, specifically -CF₃, -CF₂CF₃, or-CF₂CF₂CF₃.

In the formula, Rf² is a C₁₋₆ alkylene group optionally substituted with one or more fluorine atoms.

The "C₁₋₆ alkylene group" in the C₁₋₆ alkylene group optionally substituted with one or more fluorine atoms may be linear or branched, and is preferably a linear or branched C₁₋₃ alkylene group, more preferably a linear C₁₋₃ alkylene group.

Rf² is preferably a C₁₋₆ alkylene group substituted with one or more fluorine atoms, more preferably a C₁₋₆ perfluoroalkylene group, still more preferably a C₁₋₃ perfluoroalkylene group.

The C₁₋₆ perfluoroalkylene group may be linear or branched, and is preferably a linear or branched C₁₋₃ perfluoroalkylene group, more preferably a linear C₁₋₃ perfluoroalkyl group, specifically, -CF₂-, -CF₂CF₂ or-CF₂CF₂CF₂-.

In the formula, p is 0 or 1. In one embodiment, p is 0. In another embodiment, p is 1.

In the formula, q is each independently at each occurrence 0 or 1. In one embodiment, q is 0. In another embodiment, q is 1.

In the formulae (1) and (2), R^{F} is each independently at each occurrence a divalent fluoropolyether group.

R^{F} is preferably a group of the formula:

- (OC₆F₁₂)ₐ-(OC₅F₁₀)_{b}-(OC₄F₈)_{c}-(OC₃R^{Fa}₆)_{d}-(OC₂F₄)ₑ-(OCF₂)_{f}-

wherein
R^{Fa} is each independently at each occurrence a hydrogen atom, a fluorine atom or a chlorine atom;
a, b, c, d, e, and f are each independently an integer of 0 to 200, and the sum of a, b, c, d, e, and f is 1 or more; and the occurrence order of the respective repeating units enclosed in parentheses provided with a, b, c, d, e, or f is not limited in the formula.

R^{Fa} is preferably a hydrogen atom or a fluorine atom, more preferably a fluorine atom.

Preferably, a, b, c, d, e, and f may be each independently an integer of 0 to 100.

The sum of a, b, c, d, e and f is preferably 5 or more, more preferably 10 or more, and may be, for example, 15 or more, or 20 or more. The sum of a, b, c, d, e and f is preferably 200 or less, more preferably 100 or less, still more preferably 60 or less, and may be, for example, 50 or less, or 30 or less.

These repeating units may be linear or branched. For example, the repeating unit may be -(OC₆F₁₂)-,-(OCF₂CF₂CF₂CF₂CF₂CF₂)-, -(OCF(CF₃)CF₂CF₂CF₂CF₂)-,-(OCF₂CF (CF₃) CF₂CF₂CF₂) -, -(OCF₂CF₂CF(CF₃)CF₂CF₂)-,-(OCF₂CF₂CF₂CF(CF₃) CF₂) -, or -(OCF₂CF₂CF₂CF₂CF(CF₃)) -.-(OC₅F₁₀) - may be - (OCF₂CF₂CF₂CF₂CF₂) -, -(OCF(CF₃)CF₂CF₂CF₂)-,-(OCF₂CF (CF₃) CF₂CF₂) -, - (OCF₂CF₂CF (CF₃) CF₂) -, or-(OCF₂CF₂CF₂CF(CF₃))-. - (OC₄F₈) - may be any of - (OCF₂CF₂CF₂CF₂) -, - (OCF (CF₃) CF₂CF₂) -, -(OCF₂CF(CF₃)CF₂)-, -(OCF₂CF₂CF(CF₃))-,-(OC (CF₃)₂CF₂)-, -(OCF₂C(CF₃)₂)-, - (OCF(CF₃)CF(CF₃))-,-(OCF(C₂F₅) CF₂) and - (OCF₂CF (C₂F₅))-. - (OC₃F₆) - (i.e. in the formula, R^{Fa} is a fluorine atom) may be any of -(OCF₂CF₂CF₂)-, - (OCF(CF₃) CF₂) and - (OCF₂CF (CF₃))-. -(OC₂F₄)- may be any of -(OCF₂CF₂)- and - (OCF(CF₃))-.

In one embodiment, the repeating unit is linear. With the repeating unit being linear, the surface lubricity, the friction durability and the like of the surface-treating layer can be improved.

In one embodiment, the repeating unit is branched. With the repeating unit being branched, the dynamic friction coefficient of the surface-treating layer can be increased.

In one embodiment, R^{F} is each independently at each occurrence a group of any of the following formulae (f1) to (f5) :

-(OC₃F₆) _{d}- (f1) :

wherein d is an integer of 1 to 200;

   -(OC₄F₈)_{c}-(OC₃F₆)_{d}-(OC₂F₄)ₑ-(OCF₂)_{f}- (f2) :
wherein c and d are each independently an integer of 0 or more and 30 or less, and e and f are each independently an integer of 1 or more and 200 or less,
   the sum of c, d, e and f is 2 or more, and
   the occurrence order of the respective repeating units enclosed in parentheses accompanied by a subscript c, d, e, or f is not limited in the formula;

      - (R⁶-R⁷)_{g}- (f3):
wherein R⁶ is OCF₂ or OC₂F₄,
   R⁷ is a group selected from OC₂F₄, OC₃F₆, OC₄F₈, OC₅F₁₀, and OC₆F₁₂, or a combination of two or three groups independently selected from these groups, and
   g is an integer of 2 to 100; or

      - (OC₆F₁₂)ₐ-(OC₅F₁₀)_{b}-(OC₄F₈)_{c}-(OC₃F₆)_{d}-(OC₂F₄)ₑ-(OCF₂)_{f}- (f4) :
wherein e is an integer of 1 or more and 200 or less, a, b, c, d, and f are each independently an integer of 0 to 200, the sum of a, b, c, d, e, and f is at least 1, and the occurrence order of the respective repeating units enclosed in parentheses provided with a, b, c, d, e or f is not limited in the formula; and

   -(OC₆F₁₂)ₐ-(OC₅F₁₀)_{b}-(OC₄F₈)_{c}-(OC₃F₆)_{d}-(OC₂F₄)ₑ-(OCF₂)_{f}- (f5) :
wherein f is an integer of 1 or more and 200 or less, a, b, c, d, and e are each independently an integer of 0 or more and 200 or less, the sum of a, b, c, d, e, and f is at least 1, and the occurrence order of the respective repeating units enclosed in parentheses provided with a, b, c, d, e or f is not limited in the formula.

In the formula (f1), d is an integer of preferably 5 to 200, more preferably 10 to 100, still more preferably 15 to 50, for example 25 to 35. The group of the formula (f1) is preferably a group represented by -(OCF₂CF₂CF₂)_{d}- or-(OCF (CF₃) CF₂)_{d}-, more preferably a group represented by-(OCF₂CF₂CF₂)_{d}-.

In the formula (f2), e and f are each independently an integer of preferably 5 or more and 200 or less, more preferably 10 to 200. The sum of c, d, e and f is preferably 5 or more, more preferably 10 or more, and may be, for example, 15 or more, or 20 or more. In one embodiment, the group of the formula (f2) is preferably a group represented by -(OCF₂CF₂CF₂CF₂)_{c}-(OCF₂CF₂CF₂)_{d}-(OCF₂CF₂)ₑ-(OCF2)_{f}-. In another embodiment, the group of the formula (f2) may be a group represented by -(OC₂F₄)ₑ-(OCF₂)_{f}-.

In the formula (f3), R⁶ is preferably OC₂F₄. In the formula (f3), R⁷ is preferably a group selected from OC₂F₄, OC₃F₆ and OC₄F₈, or a combination of two or three groups independently selected from these groups, more preferably a group selected from OC₃F₆ and OC₄F₈. Examples of the combination of two or three groups independently selected from OC₂F₄, OC₃F₆, and OC₄F₈ include, but are not limited to, -OC₂F₄OC₃F₆-, -OC₂F₄OC₄F₈-, -OC₃F₆OC₂F₄-, -OC₃F₆OC₃F₆-,-OC₃F₆OC₄F₈-, -OC₄F₆OC₄F₆-, -OC₄F₈OC₃F₆-, -OC₄F₈OC₂F₄-,-OC₂F₄OC₂F₄OC₃F₆-, -OC₂F₄OC₂F₄OC₄F₈-, -OC₂F₄OC₃F₆OC₂F₄-,-OC₂F₄OC₃F₆OC₃F₆-, -OC₂F₄0C₄F₈OC₂F₄-, -OC₃F₆OC₂F₄OC₂F₄-,-OC₃F₆OC₂F₄OC₃F₆-, -OC₃F₆OC₃F₆OC₂F₄-, and -OC₄F₈OC₂F₄OC₂F₄-. In the formula (f3), g is an integer of preferably 3 or more, more preferably 5 or more. g is preferably an integer of 50 or less. In the formula (f3), OC₂F₄, OC₃F₆, OC₄F₈, OC₅F₁₀ and OC₆F₁₂ may be linear or branched, and are preferably linear. In this embodiment, the formula (f3) is preferably -(OC₂F₄-OC₃F₆)_{g}- or -(OC₂F₄-OC₄F₈)_{g}-.

In the formula (f4), e is preferably an integer of 1 or more and 100 or less, more preferably 5 or more and 100 or less. The sum of a, b, c, d, e, and f is preferably 5 or more, more preferably 10 or more, for example 10 or more and 100 or less.

In the formula (f5), f is preferably an integer of 1 or more and 100 or less, more preferably 5 or more and 100 or less. The sum of a, b, c, d, e, and f is preferably 5 or more, more preferably 10 or more, for example 10 or more and 100 or less.

In one embodiment, R^{F} is a group of the formula (f1).

In one embodiment, R^{F} is a group of the formula (f2).

In one embodiment, R^{F} is a group of the formula (f3).

In one embodiment, R^{F} is a group of the formula (f4).

In one embodiment, R^{F} is a group of the formula (f5).

In R^{F}, the ratio of e to f (hereinafter, referred to as an "e/f ratio") is 0.1 to 10, preferably 0.2 to 5, more preferably 0.2 to 2, still more preferably 0.2 to 1.5, and even more preferably 0.2 to 0.85. With an e/f ratio of 10 or less, the lubricity, friction durability, and chemical resistance (such as durability against artificial sweat) of a surface-treating layer obtained from the compound are further increased. The smaller the e/f ratio is, the higher the lubricity and the friction durability of the surface-treating layer are. On the other hand, with an e/f ratio of 0.1 or more, the stability of the compound can be further increased. The larger the e/f ratio is, the higher the stability of the compound is.

In one embodiment, the e/f ratio is 0.2 to 0.95, more preferably 0.2 to 0.9.

In one embodiment, the e/f ratio is preferably 1.0 or more, more preferably 1.0 to 2.0, from the viewpoint of heat resistance.

In the fluoropolyether group-containing compound, the number average molecular weight of each of the R^{F1} and R^{F2} moieties is not limited, and is, for example, 500 to 30,000, preferably 1,500 to 30,000, more preferably 2,000 to 10,000. In the present description, the number average molecular weight of each of the R^{F1} and R^{F2} is defined as a value obtained by ¹⁹F-NMR measurement.

In another embodiment, the number average molecular weight of each of the R^{F1} and R^{F2} moieties may be 500 to 30,000, preferably 1,000 to 20,000, more preferably 2,000 to 15,000, and even more preferably 2,000 to 10,000, for example 3,000 to 6,000.

In another embodiment, the number average molecular weight of each of the R^{F1} and R^{F2} moieties may be 4,000 to 30,000, preferably 5,000 to 10,000, more preferably 6,000 to 10,000.

In the formulae (1) and (2), R^{Si} is each independently at each occurrence a monovalent group containing a Si atom to which a hydroxyl group, a hydrolyzable group, a hydrogen atom or a monovalent organic group is bonded, and at least one R^{Si} is a monovalent group containing a Si atom to which a hydroxyl group or a hydrolyzable group is bonded.

In a preferred embodiment, R^{Si} is a monovalent group containing a Si atom to which a hydroxyl group or a hydrolyzable group is bonded.

In a preferred embodiment, R^{Si} is a group of the following formula (S1), (S2), (S3) or (S4):

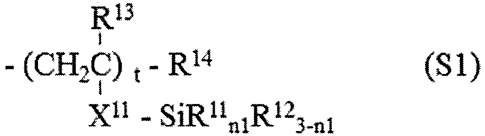

**-** SiR¹¹ₙ₁R¹²₃₋ₙ₁ (S2)

- SiR^{a1}R^{b1}₁₁R^{c1}ₘ₁ (S3)

**-** CR^{d1}ₖ₂R^{e1}₁₂R^{f1}ₘ₂ (S4)

In the formula, R¹¹ is each independently at each occurrence a hydroxyl group or a hydrolyzable group.

Preferably, R¹¹ is each independently at each occurrence a hydrolyzable group.

R¹¹ is each independently at each occurrence preferably -OR^{h}, -OCOR^{h}, -O-N=CR^{h}₂, -NR^{h}₂, -NHR^{h} or a halogen (wherein R^{h} represents a substituted or unsubstituted C₁₋₄ alkyl group), more preferably -OR^{h} (i.e. alkoxy group). Examples of R^{h} include unsubstituted alkyl groups such as a methyl group, an ethyl group, a propyl group, an isopropyl group, a n-butyl group, and an isobutyl group; and substituted alkyl groups such as a chloromethyl group. Among such groups, an alkyl group, in particular an unsubstituted alkyl group, is preferable, and a methyl group or an ethyl group is more preferable. In one embodiment, R^{h} is a methyl group. In another embodiment, R^{h} is an ethyl group.

In the formula, R¹² is each independently at each occurrence a hydrogen atom or a monovalent organic group. The monovalent organic group is a monovalent organic group other than the hydrolyzable group.

In R¹², the monovalent organic group is preferably a C₁₋₂₀ alkyl group, more preferably a C₁₋₆ alkyl group, still more preferably a methyl group.

In the formula, n1 is each independently an integer of 0 to 3 for each (SiR¹¹ₙ₁R¹²₃₋ₙ₁) unit. Provided that when R^{Si} is a group of the formula (S1) or (S2), the R^{Si} moiety at the end of each of the formulae (1) and (2) (hereinafter, also referred to simply as an "end part" of each of formulae (1) and (2)) has at least one (SiR¹¹ₙ₁R¹²₃₋ₙ₁) unit with n1 being 1 to 3. That is, in the end part, all integers n1 are not simultaneously 0. In other words, the end part of each of formulae (1) and (2) has at least one Si atom to which a hydroxyl group or a hydrolyzable group is bonded.

n1 is each independently an integer of preferably 1 to 3, more preferably 2 to 3, still more preferably 3 for each (SiR¹¹ₙ₁R¹²₃₋ₙ₁) unit.

In the formula, X¹¹ is each independently at each occurrence a single bond or a divalent organic group. The divalent organic group is preferably a C₁₋₂₀ alkylene group. The C₁₋₂₀ alkylene group may be linear or branched, and is preferably linear.

In a preferred embodiment, X¹¹ is each independently at each occurrence a single bond or a linear C₁₋₆ alkylene group, preferably a single bond or a linear C₁₋₃ alkylene group, more preferably a single bond or a linear C₁₋₂ alkylene group, still more preferably a linear C₁₋₂ alkylene group.

In the formula, R¹³ is each independently at each occurrence a hydrogen atom or a monovalent organic group. The monovalent organic group is preferably a C₁₋₂₀ alkyl group. The C₁₋₂₀ alkyl group may be linear or branched, and is preferably linear.

In a preferred embodiment, R¹³ is each independently at each occurrence a hydrogen atom or a linear C₁₋₆ alkyl group, preferably a hydrogen atom or a linear C₁₋₃ alkyl group, preferably a hydrogen atom or a methyl group.

In the formula, t is each independently at each occurrence an integer of 2 to 10.

In a preferred embodiment, t is each independently at each occurrence an integer of 2 to 6.

In the formula, R¹⁴ is each independently at each occurrence a hydrogen atom or a halogen atom. The halogen atom is preferably an iodine atom, a chlorine atom, or a fluorine atom, more preferably a fluorine atom. In a preferred embodiment, R¹⁴ is a hydrogen atom.

In the formula, R^{a1} is each independently at each occurrence -Z¹-SiR²¹ₚ₁R²²_{q1}R²³ᵣ₁.

Z¹ is each independently at each occurrence an oxygen atom or a divalent organic group. The structure denoted as Z¹ hereinafter is bonded to (SiR²¹ₚ₁R²²_{q1}R²³ᵣ₁) on the right side.

In a preferred embodiment, Z¹ is a divalent organic group.

In a preferred embodiment, Z¹ does not include a group that forms a siloxane bond with a Si atom to which Z¹ is bonded. That is, in the formula (S3), (Si-Z¹-Si) does not include a siloxane bond.

Z¹ is preferably a C₁₋₆ alkylene group, -(CH₂)_{z1}-O-(CH₂)_{z2}-(wherein z1 is an integer of 0 to 6, for example an integer of 1 to 6, and z2 is an integer of 0 to 6, for example an integer of 1 to 6), or -(CH₂)_{z3}-phenylene-(CH₂)_{z4}- (wherein z3 is an integer of 0 to 6, for example 1 to 6, z4 is an integer of 0 to 6, for example an integer of 1 to 6). The C₁₋₆ alkylene group may be linear or branched, and is preferably linear. These groups may be substituted with one or more substituents selected from, for example, a fluorine atom, a C₁₋₆ alkyl group, a C₂₋₆ alkenyl group, and a C₂₋₆ alkynyl group, and is preferably unsubstituted.

In a preferred embodiment, Z¹ is a C₁₋₆ alkylene group or -(CH₂)_{z3}-phenylene-(CH₂)_{z4}-, preferably -phenylene- (CH₂)_{z4}-. When Z¹ is the above-mentioned group, light resistance, particularly ultraviolet resistance, can be further enhanced.

In another preferred embodiment, Z¹ is a C₁₋₃ alkylene group. In one embodiment, Z¹ can be -CH₂CH₂CH₂-. In another embodiment, Z¹ can be -CH₂CH₂-.

R²¹ is each independently at each occurrence -Z^{1'}-SiR^{21'}_{p1'}R^{22'}_{q1'}R^{23'}_{r1'}.

Z^{1'} is each independently at each occurrence an oxygen atom or a divalent organic group. The structure denoted as Z^{1'}. hereinafter is bonded to (SiR^{21'}_{p1'}R^{22'}_{q1'}R^{23'}_{r1'}) on the right side.

In a preferred embodiment, Z^{1'} is a divalent organic group.

In a preferred embodiment, Z^{1'} does not include a group that forms a siloxane bond with a Si atom to which Z^{1'} is bonded. That is, in the formula (S3), (Si-Z^{1'}-Si) does not include a siloxane bond.

Z^{1'} is preferably a C₁₋₆ alkylene group, -(CH₂)_{z1'}-O-(CH₂)_{z2'}- (wherein z1' is an integer of 0 to 6, for example an integer of 1 to 6, and z2' is an integer of 0 to 6, for example an integer of 1 to 6), or -(CH₂)_{z3'}-phenylene-(CH₂)_{z4'}-(wherein z3' is an integer of 0 to 6, for example an integer of 1 to 6, z4' is an integer of 0 to 6, for example an integer of 1 to 6). The C₁₋₆ alkylene group may be linear or branched, and is preferably linear. These groups may be substituted with one or more substituents selected from, for example, a fluorine atom, a C₁₋₆ alkyl group, a C₂₋₆ alkenyl group, and a C₂₋₆ alkynyl group, and is preferably unsubstituted.

In a preferred embodiment, Z¹' is a C₁₋₆ alkylene group or -(CH₂)_{z3'}-phenylene-(CH₂)_{z4'}-, preferably -phenylene-(CH₂)_{z4'}-. When Z^{1'} is the above-mentioned group, light resistance, particularly ultraviolet resistance, can be further enhanced.

In another preferred embodiment, Z^{1'} is a C₁₋₃ alkylene group. In one embodiment, Z^{1'} can be -CH₂CH₂CH₂-. In another embodiment, Z^{1'} can be -CH₂CH₂-.

R^{21'} is each independently at each occurrence -Z^{1"}-SiR^{22"}_{q1"}R^{23"}_{r1"}.

Z^{1"} is each independently at each occurrence an oxygen atom or a divalent organic group. The structure denoted as Z^{1"} hereinafter is bonded to (SiR^{22"}_{qi"}R^{23"}_{ri"}) on the right side.

In a preferred embodiment, Z^{1"} is a divalent organic group.

In a preferred embodiment, Z^{1"} does not include a group that forms a siloxane bond with a Si atom to which Z^{1"} is bonded. That is, in the formula (S3), (Si-Z^{1"}-Si) does not include a siloxane bond.

Z^{1"} is preferably a C₁₋₆ alkylene group, -(CH₂)_{z1"}-O-(CH₂)_{z2"}- (wherein z1" is an integer of 0 to 6, for example an integer of 1 to 6, and z2" is an integer of 0 to 6, for example an integer of 1 to 6), or - (CH₂)_{z3"}-phenylene-(CH₂)_{z4"}-(wherein z3" is an integer of 0 to 6, for example 1 to 6, z4" is an integer of 0 to 6, for example an integer of 1 to 6). The C₁₋₆ alkylene group may be linear or branched, and is preferably linear. These groups may be substituted with one or more substituents selected from, for example, a fluorine atom, a C₁₋₆ alkyl group, a C₂₋₆ alkenyl group, and a C₂₋₆ alkynyl group, and is preferably unsubstituted.

In a preferred embodiment, Z^{1"} is a C₁₋₆ alkylene group or - (CH₂)_{z3"}-phenylene-(CH₂)_{z4"}-, preferably -phenylene-(CH₂)_{z4"}-. When Z^{1"} is the above-mentioned group, light resistance, particularly ultraviolet resistance, can be further enhanced.

In another preferred embodiment, Z^{1"} is a C₁₋₃ alkylene group. In one embodiment, Z^{1"} can be -CH₂CH₂CH₂-. In another embodiment, Z^{1"} can be -CH₂CH₂-.

R^{22"} is each independently at each occurrence a hydroxyl group or a hydrolyzable group.

Preferably, R^{22"} is each independently at each occurrence a hydrolyzable group.

R^{22"} is each independently at each occurrence preferably -OR^{h}, -OCOR^{h}, -O-N=CR^{h}₂, -NR^{h}₂, -NHR^{h} or a halogen (wherein R^{h} represents a substituted or unsubstituted C₁₋₄ alkyl group), more preferably -OR^{h} (i.e. alkoxy group). Examples of R^{h} include unsubstituted alkyl groups such as a methyl group, an ethyl group, a propyl group, an isopropyl group, a n-butyl group, and an isobutyl group; and substituted alkyl groups such as a chloromethyl group. Among such groups, an alkyl group, in particular an unsubstituted alkyl group, is preferable, and a methyl group or an ethyl group is more preferable. In one embodiment, R^{h} is a methyl group. In another embodiment, R^{h} is an ethyl group.

R^{23"} is each independently at each occurrence a hydrogen atom or a monovalent organic group. The monovalent organic group is a monovalent organic group other than the hydrolyzable group.

In R^{23"}, the monovalent organic group is preferably a C₁₋₂₀ alkyl group, more preferably a C₁₋₆ alkyl group, still more preferably a methyl group.

q1" is each independently at each occurrence an integer of 0 to 3, and r1" is each independently at each occurrence an integer of 0 to 3. The sum of q1" and r1" is 3 in the (SiR^{22"}_{qi"}R^{23"}_{ri"}) unit.

q1" is each independently an integer of preferably 1 to 3, more preferably 2 to 3, still more preferably 3 for each (SiR^{22"}_{qi"}R^{23"}_{ri"}) unit.

R^{22'} is each independently at each occurrence a hydroxyl group or a hydrolyzable group.

Preferably, R^{22'} is each independently at each occurrence a hydrolyzable group.

R^{22'} is each independently at each occurrence preferably -OR^{h}, -OCOR^{h}, -O-N=CR^{h}₂, -NR^{h}₂, -NHR^{h} or a halogen (wherein R^{h} represents a substituted or unsubstituted C₁₋₄ alkyl group), more preferably -OR^{h} (i.e. alkoxy group). Examples of R^{h} include unsubstituted alkyl groups such as a methyl group, an ethyl group, a propyl group, an isopropyl group, a n-butyl group, and an isobutyl group; and substituted alkyl groups such as a chloromethyl group. Among such groups, an alkyl group, in particular an unsubstituted alkyl group, is preferable, and a methyl group or an ethyl group is more 0preferable. In one embodiment, R^{h} is a methyl group. In another embodiment, R^{h} is an ethyl group.

R^{23'} is each independently at each occurrence a hydrogen atom or a monovalent organic group. The monovalent organic group is a monovalent organic group other than the hydrolyzable group.

In R^{23'}, the monovalent organic group is preferably a C₁₋₂₀ alkyl group, more preferably a C₁₋₆ alkyl group, still more preferably a methyl group.

In the formulae, p1' is each independently at each occurrence an integer 0 to 3, q1' is each independently at each occurrence an integer of 0 to 3, and r1' is each independently at each occurrence an integer of 0 to 3. The sum of p', q1' and r1' is 3 in the (SiR^{21'}_{p1'}R^{22'}_{q1'}R^{23'}_{r1'}) unit.

In one embodiment, p1' is 0.

In one embodiment, p1' may be each independently an integer of 1 to 3, an integer of 2 to 3, or 3 for each (SiR^{21'}_{p1'}R^{22'}_{q1'}R^{23'}_{r1'}) unit. In a preferred embodiment, p1' is 3.

In one embodiment, q1' is each independently an integer of 1 to 3, preferably an integer of 2 to 3, more preferably 3 for each (SiR^{21'}_{p1'}R^{22'}_{q1'}R^{23'}_{r1'}) unit.

In one embodiment, p1' is 0, and q1' is each independently an integer of 1 to 3, preferably an integer of 2 to 3, more preferably 3 for each (SiR^{21'}_{p1'}R^{22'}_{q1'}R^{23'}_{r1'}) unit.

R²² is each independently at each occurrence a hydroxyl group or a hydrolyzable group.

Preferably, R²² is each independently at each occurrence a hydrolyzable group.

R²² is each independently at each occurrence preferably -OR^{h}, -OCOR^{h}, -O-N=CR^{h}₂, -NR^{h}₂, -NHR^{h} or a halogen (wherein R^{h} represents a substituted or unsubstituted C₁₋₄ alkyl group), more preferably -OR^{h} (i.e. alkoxy group). Examples of R^{h} include unsubstituted alkyl groups such as a methyl group, an ethyl group, a propyl group, an isopropyl group, a n-butyl group, and an isobutyl group; and substituted alkyl groups such as a chloromethyl group. Among such groups, an alkyl group, in particular an unsubstituted alkyl group, is preferable, and a methyl group or an ethyl group is more preferable. In one embodiment, R^{h} is a methyl group. In another embodiment, R^{h} is an ethyl group.

R²³ is each independently at each occurrence a hydrogen atom or a monovalent organic group. The monovalent organic group is a monovalent organic group other than the hydrolyzable group.

In R²³, the monovalent organic group is preferably a C₁₋₂₀ alkyl group, more preferably a C₁₋₆ alkyl group, still more preferably a methyl group.

p1 is each independently at each occurrence an integer of 0 to 3, q1 is each independently at each occurrence an integer of 0 to 3, and r1 is each independently at each occurrence 0 to 3, The sum of p1, q1 and r1 is 3 in the (SiR²¹ₚ₁R²²_{q1}R²³ᵣ₁) unit.

In one embodiment, p1 is 0.

In one embodiment, p1 may be each independently an integer of 1 to 3, an integer of 2 to 3, or 3 for each (SiR²¹ₚ₁R²²_{q1}R²³ᵣ₁) unit. In a preferred embodiment, p1 is 3.

In one embodiment, q1 is each independently an integer of 1 to 3, preferably an integer of 2 to 3, more preferably 3 for each (SiR²¹ₚ₁R²²_{q1}R²³ᵣ₁) unit.

In one embodiment, p1 is 0, and q1 is each independently an integer of 1 to 3, preferably an integer of 2 to 3, still more preferably 3 for each (SiR²¹ₚ₁R²²_{q1}R²³ᵣ₁) unit.

In the formula, R^{b1} is each independently at each occurrence a hydroxyl group or a hydrolyzable group.

Preferably, R^{b1} is each independently at each occurrence a hydrolyzable group.

R^{b1} is each independently at each occurrence preferably -OR^{h}, -OCOR^{h}, -O-N=CR^{h}₂, -NR^{h}₂, -NHR^{h} or a halogen (wherein R^{h} represents a substituted or unsubstituted C₁₋₄ alkyl group), more preferably -OR^{h} (i.e. alkoxy group). Examples of R^{h} include unsubstituted alkyl groups such as a methyl group, an ethyl group, a propyl group, an isopropyl group, a n-butyl group, and an isobutyl group; and substituted alkyl groups such as a chloromethyl group. Among such groups, an a0lkyl group, in particular an unsubstituted alkyl group, is preferable, and a methyl group or an ethyl group is more preferable. In one embodiment, R^{b} is a methyl group. In another embodiment, R^{h} is an ethyl group.

In the formula, R^{c1} is each independently at each occurrence a hydrogen atom or a monovalent organic group. The monovalent organic group is a monovalent organic group other than the hydrolyzable group.

In R^{c1}, the monovalent organic group is preferably a C₁₋₂₀ alkyl group, more preferably a C₁₋₆ alkyl group, still more preferably a methyl group.

k1 is each independently at each occurrence an integer of 0 to 3, 11 is each independently at each occurrence an integer of 0 to 3, and m1 is each independently at each occurrence an integer of 0 to 3. The sum of k1, 11 and m1 is 3 in the (SiR^{a1}ₖ₁R^{b1}₁₁R^{c1}ₘ₁) unit.

In one embodiment, k1 is each independently an integer of 1 to 3, preferably an integer of 2 or 3, more preferably 3 for each (SiR^{a1}ₖ₁R^{b1}₁₁R^{c1}ₘ₁) unit. In a preferred embodiment, k1 is 3.

When R^{Si} is a group of the formula (S3) in the formulae (1) and (2), it is preferable that the end part of each of formulae (1) and (2) have at least two Si atoms to which a hydroxyl group or a hydrolyzable group is bonded.

In a preferred embodiment, the group of the formula (S3) has one of -Z¹SiR²²_{q1}R²³ᵣ₁ (wherein q1 is an integer of 1 to 3, preferably 2 or 3, more preferably 3, and r1 is an integer of 0 to 2), -Z^{1'}-SiR^{22'}_{q1'}R^{23'}_{r1'} (wherein q1' is an integer of 1 to 3, preferably 2 or 3, more preferably 3, and r1' is an integer of 0 to 2), and -Z^{1"}-SiR^{22"}_{q1"}R^{23"}_{r1"} (wherein q1" is an integer of 1 to 3, preferably 2 or 3, more preferably 3, and r1" is an integer of 0 to 2).

In a preferred embodiment, when R^{21'} is present in the formula (S3), q1" is an integer of 1 to 3, preferably 2 or 3, more preferably 3 in at least one, preferably all of R^{21'} groups.

In a preferred embodiment, when R²¹ is present in the formula (S3), p1' is 0, and q1' is an integer of 1 to 3, preferably 2 or 3, more preferably 3 in at least one, preferably all of R²¹ groups.

In a preferred embodiment, when R^{a1} is present in the formula (S3), p1 is 0, and q1 is an integer of 1 to 3, preferably 2 or 3, more preferably 3 in at least one, preferably all of R^{a1} groups.

In a preferred embodiment, k1 is 2 or 3, preferably 3, p1 is 0, and q1 is 2 or 3, preferably 3 in the formula (S3).

R^{d1} is each independently at each occurrence -Z²-CR³¹ₚ₂R³²_{q2}R³³ᵣ₂.

Z² is each independently at each occurrence a single bond, an oxygen atom or a divalent organic group. The structure denoted as Z² hereinafter is bonded to (CR³¹ₚ₂R³²_{q2}R³³ᵣ₂) on the right side.

In a preferred embodiment, Z² is a divalent organic group.

Z² is preferably a C₁₋₆ alkylene group, -(CH₂)_{z5}-O-(CH₂)_{z6}-(wherein z5 is an integer of 0 to 6, for example an integer of 1 to 6, and z6 is an integer of 0 to 6, for example an integer of 1 to 6), or -(CH₂)_{z7}-phenylene-(CH₂)_{z8}- (wherein z7 is an integer of 0 to 6, for example an integer of 1 to 6, and z8 is an integer of 0 to 6, for example an integer of 1 to 6). The C₁₋₆ alkylene group may be linear or branched, and is preferably linear. These groups may be substituted with one or more substituents selected from, for example, a fluorine atom, a C₁₋₆ alkyl group, a C₂₋₆ alkenyl group, and a C₂₋₆ alkynyl group, and is preferably unsubstituted.

In a preferred embodiment, Z² is a C₁₋₆ alkylene group or - (CH₂)_{z7}-phenylene-(CH₂)_{z8}-, preferably -phenylene- (CH₂)_{z6}-. When Z² is the above-mentioned group, light resistance, particularly ultraviolet resistance, can be further enhanced.

In another preferred embodiment, Z² is a C₁₋₃ alkylene group. In one embodiment, Z² can be -CH₂CH₂CH₂-. In another embodiment, Z² can be -CH₂CH₂-.

R³¹ is each independently at each occurrence -Z^{2'}-SiR^{32'}_{q2'}R^{33'}_{r2'}.

Z^{2'} is each independently at each occurrence a single bond, an oxygen atom or a divalent organic group. The structure denoted as Z^{2'} hereinafter is bonded to (CR^{32'}_{q2'}R^{33'}_{r2'}) on the right side.

Z^{2'} is preferably a C₁₋₆ alkylene group, -(CH₂)_{z5'}-O-(CH₂)_{z6'}- (wherein z5' is an integer of 0 to 6, for example an integer of 1 to 6, and z6' is an integer of 0 to 6, for example an integer of 1 to 6), or - (CH₂)_{z7'}-phenylene- (CH₂)_{z8'}-(wherein z7' is an integer of 0 to 6, for example an integer of 1 to 6, and z8' is an integer of 0 to 6, for example an integer of 1 to 6). The C₁₋₆ alkylene group may be linear or branched, and is preferably linear. These groups may be substituted with one or more substituents selected from, for example, a fluorine atom, a C₁₋₆ alkyl group, a C₂₋₆ alkenyl group, and a C₂₋₆ alkynyl group, and is preferably unsubstituted.

In a preferred embodiment, Z^{2'} is a C₁₋₆ alkylene group or -(CH₂)_{z7'}-phenylene-(CH₂)_{z8'}-, preferably -phenylene-(CH₂)_{z8'}-. When Z^{2'} is the above-mentioned group, light resistance, particularly ultraviolet resistance, can be further enhanced.

In another preferred embodiment, Z^{2'} is a C₁₋₃ alkylene group. In one embodiment, Z^{2'} can be -CH₂CH₂CH₂-. In another embodiment, Z^{2'} can be -CH₂CH₂-.

R^{32'} is each independently at each occurrence -Z³-SiR³⁴ₙ₂R³⁵₃₋ₙ₂.

Z³ is each independently at each occurrence a single bond, an oxygen atom or a divalent organic group. The structure denoted as Z³ hereinafter is bonded to (SiR³⁴ₙ₂R³⁵₃₋ₙ₂) on the right side.

In one embodiment, Z³ is an oxygen atom.

In one embodiment, Z³ is a divalent organic group.

Z³ is preferably a C₁₋₆ alkylene group, - (CH₂)_{z5"}-O-(CH₂)_{z6"}- (wherein z5" is an integer of 0 to 6, for example an integer of 1 to 6, and z6" is an integer of 0 to 6, for example an integer of 1 to 6), or -(CH₂)_{z7"}-phenylene-(CH₂)_{z8"}-(wherein z7" is an integer of 0 to 6, for example an integer of 1 to 6, and z8" is an integer of 0 to 6, for example an integer of 1 to 6). The C₁₋₆ alkylene group may be linear or branched, and is preferably linear. These groups may be substituted with one or more substituents selected from, for example, a fluorine atom, a C₁₋₆ alkyl group, a C₂₋₆ alkenyl group, and a C₂₋₆ alkynyl group, and is preferably unsubstituted.

In a preferred embodiment, Z³ is a C₁₋₆ alkylene group or -(CH₂)_{z7"}-phenylene-(CH₂)_{z8"}-, preferably -phenylene-(CH₂)_{z8"}-. When Z³ is the above-mentioned group, light resistance, particularly ultraviolet resistance, can be further enhanced.

In another preferred embodiment, Z³ is a C₁₋₃ alkylene group. In one embodiment, Z³ can be -CH₂CH₂CH₂-. In another embodiment, Z³ can be -CH₂CH₂-.

R³⁴ is each independently at each occurrence a hydroxyl group or a hydrolyzable group.

Preferably, R³⁴ is each independently at each occurrence a hydrolyzable group.

R³⁴ is each independently at each occurrence preferably -OR^{h}, -OCOR^{h}, -O-N=CR^{h}₂, -NR^{h}₂, -NHR^{h} or a halogen (wherein R^{h} represents a substituted or unsubstituted C₁₋₄ alkyl group), more preferably -OR^{h} (i.e. alkoxy group). Examples of R^{h} include unsubstituted alkyl groups such as a methyl group, an ethyl group, a propyl group, an isopropyl group, a n-butyl group, and an isobutyl group; and substituted alkyl groups such as a chloromethyl group. Among such groups, an alkyl group, in particular an unsubstituted alkyl group, is preferable, and a methyl group or an ethyl group is more preferable. In one embodiment, R^{h} is a methyl group. In another embodiment, R^{h} is an ethyl group.

R³⁵ is each independently at each occurrence a hydrogen atom or a monovalent organic group. The monovalent organic group is a monovalent organic group other than the hydrolyzable group.

In R³⁵, the monovalent organic group is preferably a C₁₋₂₀ alkyl group, more preferably a C₁₋₆ alkyl group, still more preferably a methyl group.

In the formula, n2 is each independently an integer of 0 to 3 for each (SiR³⁴ₙ₂R³⁵₃₋ₙ₂) unit. Provided that when R^{Si} is a group of the formula (S4), the end part of each of formulae (1) and (2) has at least one (SiR³⁴ₙ₂R³⁵₃₋ₙ₂) unit with n2 being 1 to 3. That is, in the end part, all integers n2 are not simultaneously 0. In other words, the end part of each of formulae (1) and (2) has at least one Si atom to which a hydroxyl group or a hydrolyzable group is bonded.

n2 is each independently an integer of preferably 1 to 3, more preferably 2 to 3, still more preferably 3 for each (SiR¹⁴ₙ₂R³⁵₃₋ₙ₂) unit.

R^{33'} is each independently at each occurrence a hydrogen atom, a hydroxyl group, or a monovalent organic group. The monovalent organic group is a monovalent organic group other than the hydrolyzable group.

In R^{33'}, the monovalent organic group is preferably a C₁₋₂₀ alkyl group, more preferably a C₁₋₆ alkyl group, still more preferably a methyl group.

In one embodiment, R^{33'} is a hydroxyl group.

In another embodiment, the monovalent organic group as R^{33'} is preferably a C₁₋₂₀ alkyl group, more preferably a C₁₋₆ alkyl group.

q2' is each independently at each occurrence an integer of 0 to 3, and r2' is each independently at each occurrence an integer of 0 to 3. The sum of q2' and r2' is 3 in the (CR^{32'}_{q2'}R^{33'}_{r2'}) unit.

q2' is each independently an integer of preferably 1 to 3, more preferably 2 to 3, still more preferably 3 for each (CR^{32'}_{q2'}R^{33'}_{r2'}) unit.

R³² is each independently at each occurrence -Z³-SiR³⁴ₙ₂R³⁵₃₋ₙ₂. -Z³-SiR³⁴ₙ₂R³⁵₃₋ₙ₂ is the same as defined in R^{32'} above.

R³³ is each independently at each occurrence a hydrogen atom, a hydroxyl group, or a monovalent organic group. The monovalent organic group is a monovalent organic group other than the hydrolyzable group.

In R³³, the monovalent organic group is preferably a C₁₋₂₀ alkyl group, more preferably a C₁₋₆ alkyl group, still more preferably a methyl group.

In one embodiment, R³³ is a hydroxyl group.

In another embodiment, the monovalent organic group as R³³ is preferably a C₁₋₂₀ alkyl group, more preferably a C₁₋₆ alkyl group.

p2 is each independently at each occurrence an integer of 0 to 3, q2 is each independently at each occurrence an integer of 0 to 3, and r2 is each independently at each occurrence an integer of 0 to 3. The sum of p2, q2 and r2 is 3 in the (CR³¹ₚ₂R³²_{q2}R³³ᵣ₂) unit.

In one embodiment, p2 is 0.

In one embodiment, p2 may be each independently an integer of 1 to 3, an integer of 2 to 3, or 3 for each (CR³¹ₚ₂R³²_{q2}R³³ᵣ₂) unit. In a preferred embodiment, p2' is 3.

In one embodiment, q2 is each independently an integer of 1 to 3, preferably an integer of 2 to 3, more preferably 3 for each (CR³¹ₚ₂R³²_{q2}R³³ᵣ₂) unit.

In one embodiment, p2 is 0, and q2 is each independently an integer of 1 to 3, preferably an integer of 2 to 3, still more preferably 3 for each (CR³¹ₚ₂R³²_{q2}R³³ᵣ₂) unit.

R^{e1} is each independently at each occurrence -Z³-SiR³⁴ₙ₂R³⁵₃₋ₙ₂. -Z³-SiR³⁴ₙ₂R³⁵₃₋ₙ₂ is the same as defined in R^{32'} above.

R^{f1} is each independently at each occurrence a hydrogen atom, a hydroxyl group, or a monovalent organic group. The monovalent organic group is a monovalent organic group other than the hydrolyzable group.

In R^{f1}, the monovalent organic group is preferably a C₁₋₂₀ alkyl group, more preferably a C₁₋₆ alkyl group, still more preferably a methyl group.

In one embodiment, R^{f1} is a hydroxyl group.

In another embodiment, the monovalent organic group as R^{f1} is preferably a C₁₋₂₀ alkyl group, more preferably a C₁₋₆ alkyl group.

k2 is each independently at each occurrence an integer of 0 to 3, 12 is each independently at each occurrence an integer of 0 to 3, and m2 is each independently at each occurrence an integer of 0 to 3. The sum of k2, 12 and m2 is 3 in the (CR^{d1}ₖ₂R^{e1}₁₂R^{f1}ₘ₂) unit.

In one embodiment, when R^{Si} is a group of the formula (S4), each end part of each of the formulae (1) and (2) has 2 or more, for example 2 to 27, preferably 2 to 9, more preferably 2 to 6, still more preferably 2 to 3, particularly preferably 3 (SiR³⁴ₙ₂R³⁵₃₋ₙ₂) units in which n2 is 1 to 3, preferably 2 or 3, more preferably 3.

In a preferred embodiment, when R^{32'} is present in the formula (S4), n2 is an integer of 1 to 3, preferably 2 or 3, more preferably 3 in at least one, preferably all of R^{32'} groups.

In a preferred embodiment, when R³² is present in the formula (S4), n2 is an integer of 1 to 3, preferably 2 or 3, more preferably 3 in at least one, preferably all of R³² groups.

In a preferred embodiment, when R^{e1} is present in the formula (S4), n2 is an integer of 1 to 3, preferably 2 or 3, more preferably 3 in at least one, preferably all of R^{a1} groups.

In a preferred embodiment, k2 is 0, 12 is 2 or 3, preferably 3, and n2 is 2 or 3, preferably 3 in the formula (S4) .

In one embodiment, R^{Si} is a group of the formula (S2), (S3) or (S4). These compounds are capable of forming a surface-treating layer having high surface lubricity.

In one embodiment, R^{Si} is a group of the formula (S1), (S3) or (S4). These compounds have a plurality of hydrolyzable groups at one end, and are therefore capable of forming a surface-treating layer which firmly adheres to a base material and has high friction durability.

In one embodiment, R^{Si} is a group of the formula (S3) or (S4). These compounds can have a plurality of hydrolyzable groups branched from one Si atom or C atom at one end, and are therefore capable of forming a surface-treating layer having higher friction durability.

In one embodiment, R^{Si} is a group of the formula (S1).

In one embodiment, R^{Si} is a group of the formula (S2).

In one embodiment, R^{Si} is a group of the formula (S3).

In one embodiment, R^{Si} is a group of the formula (S4).

In the formulae (1) and (2), X^{A} is interpreted as a linker connecting fluoropolyether moieties (R^{F1} and R^{F2}), which mainly provide water-repellency, surface lubricity and the like, to a moiety (R^{si}) providing a binding ability to a base material. Accordingly, X^{A} may be a single bond or any group as long as the compounds of formulae (1) and (2) can stably exist.

In the formula (1), α is an integer of 1 to 9, and β is an integer of 1 to 9. The integers represented by α and β can vary depending on the valence of X^{A}. The sum of α and β is the same as the valence of X^{A}. For example, when X^{A} is a decavalent organic group, the sum of α and β is 10, where for example, α is 9 and β is 1, α is 5 and βis 5, or α is 1 and βis 9. When X^{A} is a divalent organic group, each of α and βis 1.

In the formula (2), γ is an integer of 1 to 9. γ can vary depending on the valence of X^{A}. That is, γ is a value obtained by subtracting 1 from the valence of X^{A}.

X^{A} is each independently a single bond or a di- to decavalent organic group.

The di- to decavalent organic group in X^{A} is preferably a di- to octavalent organic group. In one embodiment, the di- to decavalent organic group is preferably a di- to tetravalent organic group, more preferably a divalent organic group. In another embodiment, the di- to decavalent organic group is preferably a tri- to octavalent organic group, more preferably a tri- to hexavalent organic group.

In one embodiment, X^{A} is a single bond or a divalent organic group, α is 1, and β is 1.

In one embodiment, X^{A} is a single bond or a divalent organic group, and γ is 1.

In one embodiment, X^{A} is a tri- to hexavalent organic group, α is 1, and β is 2 to 5.

In one embodiment, X^{A} is a tri- to hexavalent organic group, and γ is 2 to 5.

In one embodiment, X^{A} is a trivalent organic group, α is 1, and β is 2.

In one embodiment, X^{A} is a trivalent organic group, and γ is 2.

When X^{A} is a single bond or a divalent organic group, the formulae (1) and (2) are of the following formulae (1') and (2'), respectively.

**R^{F1} - X^{A} - R^{Si}** **(1')**

**R^{Si}- X^{A} - R^{F2}- X^{A} - R^{Si}** **(2')**

In one embodiment, X^{A} is a single bond.

In another embodiment, X^{A} is a divalent organic group.

In one embodiment, examples of the X^{A} include a single bond, and divalent organic groups of the following formula:

- (R⁵¹) ₚ₅- (X⁵¹) _{q5}-

wherein
R⁵¹ represents a single bond, - (CH₂)ₛ₅- or o-, m- or a p-phenylene group, and is preferably -(CH₂)ₛ₅-,
s5 is an integer of 1 to 20, preferably an integer of 1 to 6, more preferably an integer of 1 to 3, still more preferably 1 or 2,
X⁵¹ represents - (X⁵²)₁₅-,
X⁵² each independently at each occurrence represents a group selected from the group consisting of -O-, -S-, o-, m- or a p-phenylene group, -C(O)O-, -Si(R⁵³)₂-, -(Si(R⁵³)₂O)ₘ₅-Si (R⁵³)₂-, -CONR⁵⁴-, -O-CONR⁵⁴-, -NR⁵⁴- and -(CH₂)ₙ₅-,
R⁵³ each independently at each occurrence represents a phenyl group, a C₁₋₆ alkyl group or a C₁₋₆ alkoxy group, and is preferably a phenyl group or a C₁₋₆ alkyl group, more preferably a methyl group,
R⁵⁴ each independently at each occurrence represents a hydrogen atom, a phenyl group or a C₁₋₆ alkyl group (preferably a methyl group),
m5 is each independently at each occurrence an integer of 1 to 100 and preferably an integer of 1 to 20,
n5 is each independently at each occurrence an integer of 1 to 20, preferably an integer of 1 to 6, more preferably an integer of 1 to 3,
15 is an integer of 1 to 10, preferably an integer of 1 to 5, more preferably an integer of 1 to 3,
p5 is 0 or 1, and
q5 is 0 or 1,
where at least one of p5 and q5 is 1 and the occurrence order of the respective repeating units enclosed in parentheses provided with p5 or q5 is not limited.
Here, X^{A} (typically a hydrogen atom of X^{A}) may be substituted with one or more substituents selected from a fluorine atom, a C₁₋₃ alkyl group and a C₁₋₃ fluoroalkyl group. In a preferred embodiment, X^{A} is not substituted with any of these groups.

In a preferred embodiment, X^{A} is each independently - (R⁵¹) ₚ₅- (X⁵¹) _{q5}-R⁵²- . R⁵² represents a single bond, -(CH₂)ₜ₅- or o-, m- or a p-phenylene group, and is preferably -(CH₂)ₜ₅-. t5 is an integer of 1 to 20, preferably an integer of 2 to 6, more preferably an integer of 2 to 3. Here, R⁵² (typically a hydrogen atom of R⁵²) may be substituted with one or more substituents selected from a fluorine atom, a C₁₋₃ alkyl group and a C₁₋₃ fluoroalkyl group. In a preferred embodiment, R⁵⁶ is not substituted with any of these groups.

Preferably, X^{A} can be each independently
a single bond,
a -C₁₋₂₀ alkylene group,
-_{R}51-_{X}53-_{R}52- or
-_{X}54-_{R}5-
wherein R⁵¹ and R⁵² are the same as defined above,
   X⁵³ represents

   -O-,

   -S-,

   -C(O)O-,

   -CONR⁵⁴-,

   -O-CONR⁵⁴-,

   -Si (R⁵³)₂-,

   - (Si (R⁵³) ₂O) ₘ₅-Si (R⁵³) ₂-,

   -O- ( CH₂ ) ᵤ₅- (Si (R⁵³) ₂O) ₘ₅-Si (R⁵³) ₂-,

   -O- (CH₂)ᵤ₅-Si (R⁵³) ₂-O-Si (R⁵³) ₂-CH₂CH₂-Si (R⁵³) ₂-O-Si (R⁵³) ₂-,

   -O- (CH₂)ᵤ₅-Si (OCH₃) ₂OSi (OCH₃) ₂-,

   -CONR⁵⁴- ( CH₂ ) ᵤ₅- (Si (R⁵³) ₂O) ₘ₅-Si (R⁵³) ₂-,

   -CONR⁵⁴-(CH₂)ᵤ₅-N(R⁵⁴)-,

   or

   -CONR⁵⁴- (o-, m- or p-phenylene) -Si (R⁵³) ₂-,
wherein R⁵³, R⁵⁴ and m5 are the same as defined above,
   u5 is an integer of. 1 to 20, preferably an integer of 2 to 6, more preferably an integer of 2 to 3, and
   X⁵⁴ represents

      -S-,

      -C(O)O-,

      -CONR⁵⁴-,

      -O-CONR⁵⁴-,

      -CONR⁵⁴- ( CH₂ ) ᵤ₅- (Si (R⁵⁴) ₂O) ₘ₅-Si (R⁵⁴) ₂-,

      -CONR⁵⁴-(CH₂)ᵤ₅-N(R⁵⁴)-, or

      -CONR⁵⁴- (o-, m- or p-phenylene) -Si (R⁵⁴) ₂-,
wherein each symbol is the same as defined above.

More preferably, X^{A} is each independently
a single bond,
a -C₁₋₂₀ alkylene group,
- ( CH₂ ) ₛ₅-X⁵³-,
- ( CH₂ ) ₛ₅-X⁵³- ( CH₂ ) ₜ₅-
-X⁵⁴- , or
-X⁵⁴- ( CH₂ ) ₜ₅-
wherein X⁵³, X⁵⁴, s5 and t5 are the same as defined above.

More preferably, X^{A} can be each independently
a single bond,
a -C₁₋₂₀ alkylene group,
- ( CH₂ ) ₛ₅-X⁵³- ( CH₂ ) ₜ₅-, or
-X⁵¹- ( CH₂ ) t₅-
wherein each symbol is the same meaning as defined above.

In a preferred embodiment, X^{A} can be each independently a single bond,
a -C₁₋₂₀ alkylene group,
- (CH₂)ₛ₅ -X⁵³-, or
- ( CH₂ ) ₛ₅-X⁵³- ( CH₂ ) t₅-
wherein
   X⁵³ is -O-, -CONR⁵⁴- or -O-CONR⁵⁴-,
   R⁵⁴ each independently at each occurrence represents a hydrogen atom, a phenyl group or a C₁₋₆ alkyl group,
   s5 is an integer of 1 to 20, and
   t5 is an integer of 1 to 20.

In one embodiment, X^{A} is each independently
a single bond,
a -C₁₋₂₀ alkylene group,
-(CH₂)ₛ₅-O-(CH₂)ₜ₅-,
- ( CH₂ ) ₛ₅- (Si (R⁵³) ₂O)ₘ₅-Si (R⁵³) ₂- ( CH₂ ) ₜ₅-,
- ( CH₂ ) ₛ₅-O- ( CH₂ ) ᵤ₅- (Si (R⁵³) ₂O) ₘ₅-Si (R⁵³) ₂- ( CH₂ ) ₜ₅-, or
- ( CH₂ ) ₛ₅-O- ( CH₂ ) ₜ₅-Si (R⁵³) ₂- (CH₂)ᵤ₅-Si (R⁵³) ₂- (CᵥH₂ᵥ) -
wherein R⁵³, m5, s5, t5 and u5 are the same as defined above;
v5 is an integer of 1 to 20, preferably an integer of 2 to 6, more preferably an integer of 2 to 3.

In the formula, -(CᵥH₂ᵥ)- may be linear or branched and can be, for example, -CH₂CH₂-, -CH₂CH₂CH₂-, -CH(CH₃)-, or - CH (CH₃) CH₂-.

X^{A} may be each independently substituted with one or more substituents selected from a fluorine atom, a C₁₋₃ alkyl group and a C₁₋₃ fluoroalkyl group (preferably a C₁₋₃ perfluoroalkyl group). In one embodiment, X^{A} is unsubstituted.

X^{A} is bonded to R^{F1} or R^{F2} on the left side, and bonded to R^{Si} on the right side.

In one embodiment, X^{A} can be each independently a group other than an -O-C₁₋₆ alkylene group.

In another embodiment, examples of X^{A} include the following groups: 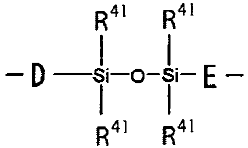 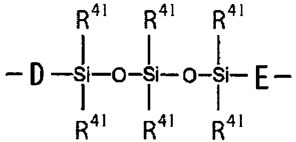 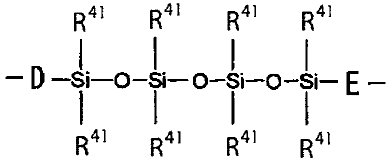 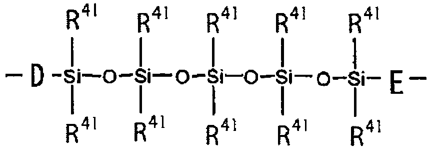 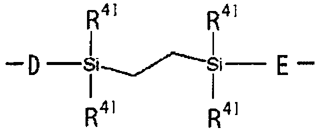 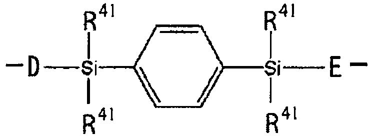 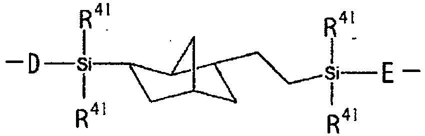
wherein R⁴¹ is each independently a hydrogen atom, a phenyl group, an alkyl group having 1 to 6 carbon atoms or a C₁₋₆ alkoxy group, and preferably a methyl group,
   D is a group selected from

   -CH₂O ( CH₂ ) ₂-,

   -CH₂O ( CH₂ ) ₃-,

   -CF₂O ( CH₂ ) ₃-,

   - ( CH₂ ) ₂-,

   - ( CH₂ ) ₃-,

   - ( CH₂ ) ₄-,

   -CONH- ( CH₂ ) ₃-,

   -CON(CH₃)-(CH₂)₃-,

   -CON(Ph)-(CH₂)₃- (wherein Ph means phenyl),

   and 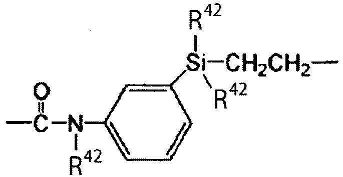
wherein R⁴² each independently represents a hydrogen atom, a C₁₋₆ alkyl group or a C₁₋₆ alkoxy group, preferably a methyl group or a methoxy group, more preferably a methyl group,
   E is -(CH₂)ₙ- (wherein n is an integer of 2 to 6), and
   D is bonded to R^{F1} or R^{F2} of the molecular backbone and E is bonded to R^{Si}.

Specific examples of X^{A} include
a single bond,

-CH₂OCH₂- ,

-CH₂O ( CH₂ ) ₂-,

-CH₂O ( CH₂ ) ₃-,

-CH₂O(CH₂)₄-,

-CH₂O ( CH₂ ) ₅-,

-CH₂O ( CH₂ ) ₆-,

-CF₂-CH₂-O-CH₂-,

-CF₂-CH₂-O- ( CH₂ ) ₂-,

-CF₂-CH₂-O- ( CH₂ ) ₃-,

-CF₂-CH₂-O- ( CH₂ ) ₆-,

-CH₂O ( CH₂ ) ₃Si (CH₃) ₂OSi (CH₃) ₂ ( CH₂ ) ₂-,

-CH₂O ( CH₂ ) ₃Si (CH₃) ₂OSi (CH₃) ₂OSi (CH₃) ₂ ( CH₂ ) ₂-,

-CH₂O ( CH₂ ) ₃Si (CH₃) ₂O (Si (CH₃) ₂O) ₂Si (CH₃) ₂ ( CH₂ ) ₂-,

-CH₂O ( CH₂ ) ₃Si (CH₃) ₂O (Si (CH₃) ₂O) ₃Si (CH₃) ₂ ( CH₂ ) ₂-,

-CH₂O ( CH₂ ) ₃Si (CH₃) ₂O (Si (CH₃) ₂O) ₁₀Si (CH₃) ₂ ( CH₂ ) ₂-,

-CH₂O ( CH₂ ) ₃Si (CH₃) ₂O (Si (CH₃) ₂O) ₂₀Si (CH₃) ₂ ( CH₂ ) ₂-,

-CH₂OCF₂CHFOCF₂-,

-CH₂OCF₂CHFOCF₂CF₂-,

-CH₂OCF₂CHFOCF₂CF₂CF₂-,

-CH₂OCH₂CF₂CF₂OCF₂-,

-CH₂OCH₂CF₂CF₂OCF₂CF₂-,

-CH₂OCH₂CF₂CF₂OCF₂CF₂CF₂-,

-CH₂OCH₂CF₂CF₂OCF (CF₃) CF₂OCF₂-,

-CH₂OCH₂CF₂CF₂OCF (CF₃) CF₂OCF₂CF₂- ,

-CH₂OCH₂CF₂CF₂OCF (CF₃) CF₂OCF₂CF₂CF₂-,

-CH₂OCH₂CHFCF₂OCF₂- ,

-CH₂OCH₂CHFCF₂OCF₂CF₂- ,

-CH₂OCH₂CHFCF₂OCF₂CF₂CF₂- ,

-CH₂OCH₂CHFCF₂OCF (CF₃) CF₂OCF₂-,

-CH_{z}OCH₂CHFCF_{z}OCF (CF₃) CF₂OCF₂CF₂-,

-CH₂OCH₂CHFCF₂OCF (CF₃) CF₂OCF₂CF₂CF₂-

-CH₂OCF₂CHFOCF₂CF₂CF₂-C (O) NH-CH₂-,

CH₂OCH₂ ( CH₂ ) ₇CH₂Si (OCH₃) ₂OSi (OCH₃) ₂ ( CH₂ ) ₂Si (OCH₃) ₂OSi (OCH₃) ₂ (CH₂ ) 2-,

-CH₂OCH₂CH₂CH₂Si (OCH₃) ₂OSi (OCH₃) ₂ ( CH₂ ) ₃-,

-CH₂OCH₂CH₂CH₂Si (OCH₂CH₃) ₂OSi (OCH₂CH₃) ₂ ( CH₂ ) ₃-,

-CH₂OCH₂CH₂CH₂Si (OCH₃) ₂OSi (OCH₃) ₂ ( CH₂ ) ₂-,

-CH₂OCH₂CH₂CH₂Si (OCH₂CH₃) ₂OSi (OCH₂CH₃) ₂ ( CH₂ ) ₂-,

- ( CH₂ ) ₂-Si (CH₃) ₂- ( CH₂ ) ₂-,

-CH₂- ,

- ( CH₂ ) ₂-,

- ( CH₂ ) ₃-,

- ( CH₂ ) ₄-,

- ( CH₂ ) ₅-,

- ( CH₂ ) ₆-,

-CF₂-CH₂-,

-CF₂- ( CH₂ ) ₂-,

-CF₂- ( CH₂ ) ₃-,

-CF₂- ( CH₂ ) ₄-,

-CF₂- ( CH₂ ) ₅-,

-CF₂- ( CH₂ ) ₆-,

-CO- ,

-CONH-,

-CONH -CH₂- ,

-CONH- ( CH₂ ) ₂-,

-CONH- ( CH₂ ) ₃-,

-CONH- ( CH₂ ) ₄-,

-CONH- ( CH₂ ) ₅-,

-CONH- ( CH₂ ) ₆-,

-CF₂CONHCH₂-,

-CF₂CONH ( CH₂ ) ₂-,

-CF₂CONH ( CH₂ ) ₃-,

-CF₂CONH ( CH₂ ) ₄-,

-CF₂CONH ( CH₂ ) ₅-,

-CF₂CONH ( CH₂ ) ₆-,

-CON(CH₃) -CH₂-,

-CON(CH₃)-(CH₂)₂-,

-CON(CH₃)-(CH₂)₃-,

-CON(CH₃)-(CH₂)₄-,

-CON(CH₃)-(CH₂)₅-,

-CON(CH₃)-(CH₂)₆-,

-CON(Ph)-CH₂- (wherein Ph means phenyl),

-CON(Ph)-(CH₂)₂- (wherein Ph means phenyl),

-CON(Ph)-(CH₂)₃- (wherein Ph means phenyl),

-CON(Ph)-(CH₂)₄- (wherein Ph means phenyl),

-CON(Ph)-(CH₂)₅- (wherein Ph means phenyl),

-CON(Ph)-(CH₂)₆- (wherein Ph means phenyl),

-CF₂-CON(CH₃)-(CH₂)₃-,

-CF₂-CON(Ph)-(CH₂)₃- (wherein Ph means phenyl),

-CF₂-CON (CH₃) - ( CH₂ ) ₆-,

-CF₂-CON(Ph)-(CH₂)₆- (wherein Ph means phenyl),

-CONH-(CH₂)₂NH(CH₂)₃-,

-CONH- ( CH₂ ) ₆NH (CH₂)₃-,

-CH₂O-CONH- (CH₂)₃-,

-CH₂O-CONH- ( CH₂ ) ₆-,

-S- ( CH₂ ) ₃-,

-(CH₂)₂S(CH₂)₃-,

-CONH- ( CH₂ ) ₃Si (CH₃) ₂OSi (CH₃) ₂ ( CH₂ ) ₂-,

-CONH- ( CH₂ ) ₃Si (CH₃) ₂OSi (CH₃) ₂OSi (CH₃) ₂ ( CH₂ ) ₂-,

-CONH- ( CH₂ ) ₃Si (CH₃) ₂O (Si (CH₃) ₂O) ₂Si (CH₃) ₂ ( CH₂ ) ₂-,

-CONH- ( CH₂ ) ₃Si (CH₃) ₂O (Si (CH₃) ₂O) ₃Si (CH₃) ₂ ( CH₂ ) ₂-,

-CONH- ( CH₂ ) ₃Si (CH₃) ₂O (Si (CH₃) ₂O) ₁₀Si (CH₃) ₂ ( CH₂ ) ₂-,

-CONH- ( CH₂ ) ₃Si (CH₃) ₂O (Si (CH₃) ₂O) ₂₀Si (CH₃) ₂ ( CH₂ ) ₂-,

-C (O) O- ( CH₂ ) ₃-,

-C (O) O- ( CH₂ ) ₆-,

-CH₂-O- ( CH₂ ) ₃-Si (CH₃) ₂- ( CH₂ ) ₂-Si (CH₃) ₂- ( CH₂ ) ₂-,

-CH₂-O- ( CH₂ ) ₃-Si (CH₃) ₂- ( CH₂ ) ₂-Si (CH₃) ₂-CH (CH₃) -,

-CH₂-O- ( CH₂ ) ₃-Si (CH₃) ₂- ( CH₂ ) ₂-Si (CH₃) ₂- ( CH₂ ) ₃-,

-CH₂-O- ( CH₂ ) ₃-Si (CH₃) ₂- ( CH₂ ) ₂-Si (CH₃) ₂-CH (CH₃) -CH₂-,

-OCH₂- ,

-O ( CH₂ ) ₃-,

-OCFHCF₂-,

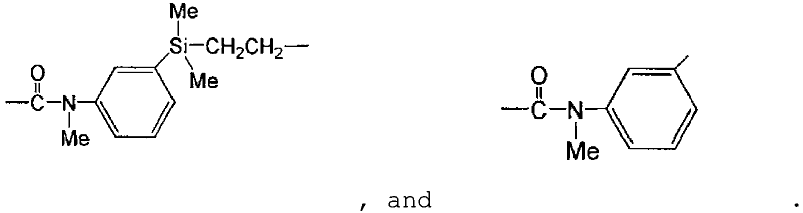

In still another embodiment, X^{A} is each independently a group of the formula: -(R¹⁶)ₓ₁-(CFR¹⁷)_{y1}-(CH₂)_{z1}-. In the formula, x1, y1 and z1 are each independently an integer of 0 to 10, and the sum of x1, y1 and z1 is 1 or more, the occurrence order of the respective repeating units enclosed in parentheses is not limited in the formula.

In the formula, R¹⁶ is each independently at each occurrence an oxygen atom, phenylene, carbazolylene, -NR¹⁸-(wherein R¹⁸ represents a hydrogen atom or an organic group) or a divalent organic group. Preferably, R¹⁸ is an oxygen atom or a divalent polar group.

Examples of the "divalent polar group" include, but are not limited to, -C(O)-, -C(=NR¹⁹)- and -C(O)NR⁹- (wherein R¹⁹ represents a hydrogen atom or a lower alkyl group). The "lower alkyl group" is, for example, an alkyl group having 1 to 6 carbon atoms, such as methyl, ethyl or n-propyl, and these may be substituted with one or more fluorine atoms.

In the formula, R¹⁷ each independently at each occurrence represents a hydrogen atom, a fluorine atom or a lower fluoroalkyl group, and preferably a fluorine atom. The "lower fluoroalkyl group" is, for example, a fluoroalkyl group having 1 to 6 carbon atoms and preferably 1 to 3 carbon atoms, preferably a perfluoroalkyl group having 1 to 3 carbon atoms, more preferably a trifluoromethyl group or pentafluoroethyl group, and still more preferably a trifluoromethyl group.

In still another embodiment, examples of X^{A} include the following group: 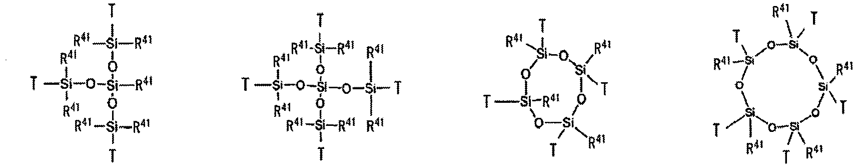 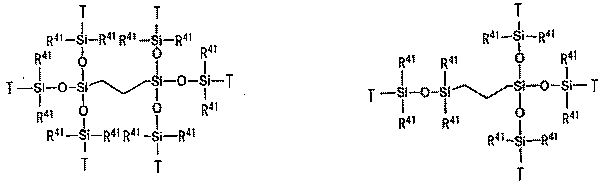 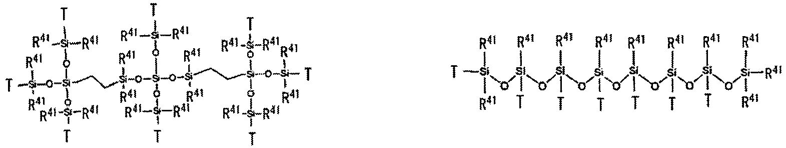
wherein
   R⁴¹ is each independently a hydrogen atom, a phenyl group, an alkyl group having 1 to 6 carbon atoms or a C₁₋₆ alkoxy group, preferably a methyl group;
   some of the groups of T in each X^{A} group are the following groups bonded to R^{F1} or R^{F2} of the molecular backbone:

      -CH₂O ( CH₂ ) ₂-,

      -CH₂O ( CH₂ ) ₃-,

      -CF₂O ( CH₂ ) ₃-,

      - ( CH₂ ) ₂-,

      - ( CH₂ ) ₃-,

      - ( CH₂ ) ₄-,

      -CONH- ( CH₂ ) ₃-,

      -CON (CH₃) - ( CH₂ ) ₃-, and

      -CON(Ph)-(CH₂)₃- (wherein Ph means phenyl),

      or 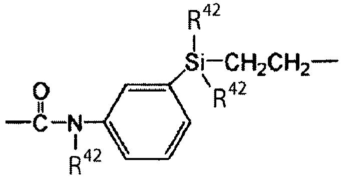
wherein R⁴² each independently represents a hydrogen atom, a C₁₋₆ alkyl group or a C₁₋₆ alkoxy group, preferably a methyl group or a methoxy group, more preferably a methyl group, and
some other groups of T are bonded to R^{Si} of the molecular backbone, and the remaining groups of T, if present, are each independently a methyl group, a phenyl group, a C₁₋₆ alkoxy group, or a radical scavenging group or an UV absorbing group.

The radical scavenging group is not limited as long as it can capture a radical generated by light irradiation, and, for example, a residue of a benzophenone, a benzotriazole, a benzoate, a phenyl salicylate, crotonic acid, a malonate, an organo-acrylate, a hindered amine, a hindered phenol or a triazine, is mentioned.

The UV absorbing group is not limited as long as it can absorb ultraviolet rays, and, for example, a residue of a benzotriazole, a hydroxybenzophenone, an ester of a substituted and unsubstituted benzoic acid or salicylic acid compound, an acrylate or an alkoxy cinnamate, an oxamide, an oxanilide, a benzoxazinone or a benzoxazole, is mentioned.

In a preferred embodiment, examples of preferable radical scavenging group or UV absorbing group include the groups of the following formulae.

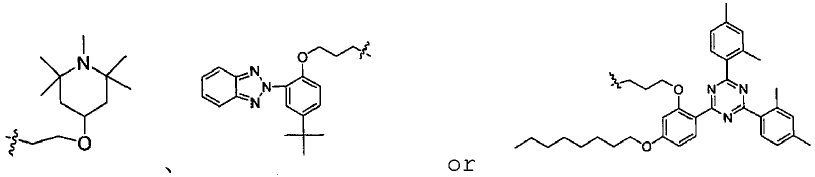

In this embodiment, X^{A} can be each independently a tri-to decavalent organic group.

In still another embodiment, examples of X^{A} include the following group: 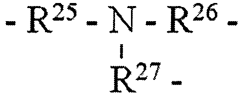 wherein R²⁵, R²⁶ and R²⁷ are each independently a di- to hexavalent organic group, and
R²⁵ is bonded to at least one R^{F1}, and R²⁶ and R²⁷ are each bonded to at least one R^{Si}.

In one embodiment, R²⁵ is a single bond, a C₁₋₂₀ alkylene group, a C₃₋₂₀ cycloalkylene group, a C₅₋₂₀ arylene group, - R⁵⁷-X⁵⁸-R⁵⁹-, -X⁵⁸-R⁵⁹- or -R⁵⁷-X⁵⁸-. R⁵⁷ and R⁵⁹ are each independently a single bond, a C₁₋₂₀ alkylene group, a C₃₋₂₀ . cycloalkylene group or a C₅₋₂₀ arylene group. X⁵⁸ is -O-, - S-, -CO-, -O-CO- or -COO-.

In one embodiment, R²⁶ and R²⁷ are each independently a hydrocarbon, or a group having at least one atom selected from N, O and S at the end or in the backbone of a hydrocarbon, and preferred examples thereof include C₁₋₆ alkyl groups, - R³⁶-R³⁷-R³⁶ and -R³⁶-CHR³⁸₂-. Here, R³⁶ is each independently a single bond or an alkyl group having 1 to 6 carbon atoms, preferably an alkyl group having 1 to 6 carbon atoms. R³⁷ is N, O or S, preferably N or O. R³⁸ is -R⁴⁵-R⁴⁶-R⁴⁵- , -R⁴⁶-R⁴⁵- or -R⁴⁵-R⁴⁶-. Here, R⁴⁵ is each independently an alkyl group having 1 to 6 carbon atoms. R⁴⁶ is N, O or S, preferably O.

In this embodiment, X^{A} can be each independently a tri-to decavalent organic group.

The fluoropolyether group-containing compound of the formula (1) or (2) is not limited, and can have an average molecular weight of 5 × 10² to 1 × 10⁵. In particular, the average molecular weight is preferably 2,000 to 32,000, more preferably 2,500 to 12,000, from the viewpoint of friction durability. The "average molecular weight" is a number average molecular weight, and the "average molecular weight" is a value obtained by ¹⁹F-NMR measurement.

In one embodiment, the fluoropolyether group-containing silane compound in the surface-treating agent of the present disclosure is a compound of the formula (1).

In another embodiment, the fluoropolyether group-containing silane compound in the surface-treating agent of the present disclosure is a compound of the formula (2).

In another embodiment, the fluoropolyether group-containing silane compound in the surface-treating agent of the present disclosure is any of a compound of the formula (1) and a compound of the formula (2).

In the surface-treating agent of the present disclosure, the content of the compound of the formula (2) is preferably 0.1 mol% or more and 35 mol% or less based on the total of the compound of the formula (1) and the compound of the formula (2). The lower limit of the content of the compound of the formula (2) can be preferably 0.1 mol%, more preferably 0.2 mol%, still more preferably 0.5 mol%, even more preferably 1 mol%, particularly preferably 2 mol%, especially 5 mol%, based on the total of the compound of the formula (1) and the compound of the formula (2). The upper limit of the content of the compound of the formula (2) can be preferably 35 mol%, more preferably 30 mol%, still more preferably 20 mol%, even more preferably 15 mol% or 10 mol%, based on the total of the compound of the formula (1) and the compound of the formula (2). The compound of the formula (2) is preferably 0.1 mol% or more and 30 mol% or less, more preferably 0.1 mol% or more and 20 mol% or less, still more preferably 0.2 mol% or more and 10 mol% or less, even more preferably 0.5 mol% or more and 10 mol% or less, and particularly preferably 1 mol% or more and 10 mol% or less, for example, 2 mol% or more and 10 mol% or less, or 5 mol% or more and 10 mol% or less, based on the total of the compound of the formula (1) and the compound of the formula (2). When the content of the compound of the formula (2) is within the above-mentioned range, friction durability can be further improved.

The compound of the formula (1) or (2) can be obtained by a method described in, for example, Patent Literature 1 or Patent Literature 2.

The fluoropolyether group-containing silane compound contained in the surface-treating agent of the present disclosure is produced by, for example, reacting a compound capable of introducing a hydrolyzable group, for example methanol, with a trichlorosilane derivative in introduction of a hydrolyzable group to a Si atom. When the compound is produced in the manner described above, a certain amount of chlorine ions can be present in the surface-treating agent. The present inventors have found that chlorine ions contained in the surface-treating agent affect the functions of the surface-treating agent. In particular, when the content of chlorine ions contained in the surface-treating agent is more than 1.0 ppm by mass, the stability of a silane moiety having a hydrolyzable group is deteriorated, and the number of reaction points with the base material decreases, so that the friction durability of the obtained surface-treating layer can be deteriorated. In addition, the presence of chlorine ions may cause metal corrosion. Further, when the content of chlorine ions contained in the surface-treating agent is less than 0.1 ppm by mass, a sufficient catalyst effect of chlorine ions cannot be obtained, and the adhesion of the obtained surface-treating agent decreases, so that the friction durability can be deteriorated. Thus, the present inventors have found that by adjusting the chlorine ion concentration in the surface-treating agent to a predetermined concentration of 0.1 ppm by mass or more and 1.0 ppm by mass, the above-described problems can be avoided. In this way, the surface-treating agent of the present disclosure has been invented.

For the surface-treating agent of the present disclosure, the chlorine ion concentration in the surface-treating agent is 0.1 ppm by mass or more and 1.0 ppm by mass or less. With the chlorine ion concentration being 1.0 ppm by mass or less, the friction durability of the obtained surface-treating layer can be enhanced. Further, this is advantageous for storage, and enables suppression of adverse effects on apparatus during treatment such as corrosion of metallic components. With the chlorine ion concentration being 0.1 ppm by mass or more, the friction durability of the obtained surface-treating layer can be enhanced.

The chlorine ion concentration can be 1.0 ppm by mass or less, preferably 0.80 ppm by mass or less, more preferably 0.70 ppm by mass or less.

The chlorine ion concentration can be 0.1 ppm by mass or more, more preferably 0.2 ppm by mass or more.

In one embodiment, the chlorine ion concentration can be preferably 0.20 to 0.80 ppm by mass, for example 0.20 to 0.70 ppm by mass, 0.30 to 0.80 ppm by mass, or 0.30 to 0.70 ppm by mass.

The chlorine ion concentration contained in the surface-treating agent of the present disclosure can be measured by ion chromatography. Specifically, for measurement of the chlorine ion concentration by ion chromatography, for example, chlorine ions can be measured with an ion chromatograph apparatus, followed by determining the chlorine ion concentration by an external standard method. An ion concentration measurement sample can be prepared by, for example, diluting a sample with hydro fluoro ether such as HFE 7300, then adding ultrapure water, and extracting chlorine ions into the aqueous layer. Examples of the apparatus and conditions include the following.
Apparatus name: Dionex ICS-2100 (Thermo SCIENTIFIC)
Column: Dionex IonPac AS20
Temperature: 30°C
Flow rate: 1.0 mL/min
Detector: electrical conductivity

The chlorine ion concentration contained in the surface-treating agent of the present disclosure can be adjusted to the chlorine ion concentration in the surface-treating agent of the present disclosure by purifying a composition with a high chlorine ion concentration or adding a compound which produces chlorine or chlorine ions (e.g. HCl or a compound having a -SiCl₃ group).

Examples of the purification method include a method in which a metal or a metal compound is added to a composition with a high chlorine ion concentration and the mixture is heated; a method in which the composition is cleaned with an excessive amount of alcohol; a method in which the composition is treated with a metal alkoxide; and a method in which the composition is added to an anionic exchange resin.

Examples of the metal include zinc, magnesium and aluminum.

Examples of the metal compound include organic metal compounds, preferably organic zinc compounds such as dimethyl zinc and zinc octanoate.

Preferably, the metal and metal compound are used in the form of powder.

Examples of the alcohol include hydrocarbon-based alcohols such as ethanol and propanol.

Examples of the metal alkoxide include basic metal alkoxides such as sodium methoxide and potassium ethoxide.

The surface-treating agent of the present disclosure can contain a (unreactive) fluoropolyether compound which can be understood as solvent or fluorine-containing oil, preferably a perfluoro(poly)ether compound (hereinafter, referred to collectively as "fluorine-containing oil"), a (unreactive) silicone compound which can be understood as a silicone oil (hereinafter, referred to as "silicone oil"), a catalyst, a surfactant, a polymerization inhibitor, a sensitizer and the like.

Examples of the solvent include aliphatic hydrocarbons such as hexane, cyclohexane, heptane, octane, nonane, decane, undecane, dodecane, and mineral spirits; aromatic hydrocarbons such as benzene, toluene, xylene, naphthalene, and solvent naphtha; esters such as methyl acetate, ethyl acetate, propyl acetate, n-butyl acetate, isopropyl acetate, isobutyl acetate, cellosolve acetate, propylene glycol methyl ether acetate, carbitol acetate, diethyl oxalate, ethyl pyruvate, ethyl 2-hydroxybutyrate, ethyl acetoacetate, amyl acetate, methyl lactate, ethyl lactate, methyl 3-methoxypropionate, ethyl 3-methoxypropionate, methyl 2-hydroxyisobutyrate, and ethyl 2-hydroxyisobutyrate; ketones such as acetone, methyl ethyl ketone, methyl isobutyl ketone, 2-hexanone, cyclohexanone, methyl amino ketone, and 2-heptanone; glycol ethers such as ethyl cellosolve, methyl cellosolve, methyl cellosolve acetate, ethyl cellosolve acetate, propylene glycol monomethyl ether, propylene glycol monoethyl ether, propylene glycol monobutyl ether, propylene glycol monomethyl ether acetate, propylene glycol monoethyl ether acetate, propylene glycol monobutyl ether acetate, dipropylene glycol dimethyl ether, and ethylene glycol monoalkyl ether; alcohols such as methanol, ethanol, isopropanol, n-butanol, isobutanol, tert-butanol, sec-butanol, 3-pentanol, octyl alcohol, 3-methyl-3-methoxybutanol, and tert-amyl alcohol; glycols such as ethylene glycol and propylene glycol; cyclic ethers such as tetrahydrofuran, tetrahydropyran, and dioxane; amides such as N,N-dimethylformamide and N,N-dimethylacetamide; ether alcohols such as methyl cellosolve, cellosolve, isopropyl cellosolve, butyl cellosolve, and diethylene glycol monomethyl ether; diethylene glycol monoethyl ether acetate; and fluorine-containing solvents such as 1,1,2-trichloro-1,2,2-trifluoroethane, 1,2-dichloro-1,1,2,2-tetrafluoroethane, dimethyl sulfoxide, 1,1-dichloro-1,2,2,3,3-pentafluoropropane (HCFC 225), Zeorora H, HFE 7100, HFE 7200, and HFE 7300. Alternatively, the solvent may be a mixed solvent of two or more of such solvents.

The fluorine-containing oil is not limited, and examples thereof include a compound (perfluoro (poly) ether compound) of the following general formula (3).

Rf⁵-(OC₄F₈)_{a'} -(OC₃F₆) _{b'}-(OC₂F₄)_{c'}-(OCF₂)_{d'}-Rf⁶ ... (3)

In the formula, Rf⁵ represents an alkyl group having 1 to 16 carbon atoms optionally substituted with one or more fluorine atoms (preferably, C₁₋₁₆ perfluoroalkyl group), Rf⁶ represents an alkyl group having 1 to 16 carbon atoms optionally substituted with one or more fluorine atoms (preferably, C₁₋₁₆ perfluoroalkyl group), a fluorine atom, or a hydrogen atom, and Rf⁵ and Rf⁶ are each independently, more preferably, a C₁₋₃ perfluoroalkyl group.

a', b', c' and d' represent the respective four numbers of repeating units in perfluoro(poly)ether constituting a main backbone of the polymer and are mutually independently an integer of 0 or more and 300 or less, the sum of a', b', c' and d' is at least 1, preferably 1 to 300, more preferably 20 to 300. The occurrence order of the respective repeating units in parentheses accompanied by a subscript a', b', c' or d' is not limited in the formula. Among such repeating units, -(OC₄F₈)- may be any of (OCF₂CF₂CF₂CF₂) - (OCF(CF₃) CF₂CF₂) -, - (OCF₂CF(CF₃) CF₂) -, - (OCF₂CF₂CF(CF₃) ) -, - (OC (CF₃) ₂CF₂) -, - (OCF₂C (CF₃) ₂) -, - (OCF(CF₃) CF(CF₃) ) -, - (OCF(C₂F₅) CF₂) - and - (OCF₂CF(C₂F₅) )-, and is preferably - (OCF₂CF₂CF₂CF₂) -. - (OC₃F₆) - may be any of - (OCF₂CF₂CF₂) -, - (OCF(CF₃) CF₂) - and - (OCF₂CF(CF₃) )-, and is preferably - (OCF₂CF₂CF₂) -. - (OC₂F₄) - may be any of - (OCF₂CF₂) - and - (OCF(CF₃))-, and is preferably -(OCF₂CF₂)-.

Examples of the perfluoro(poly)ether compound of the general formula (3) include a compound of any of the following general formulae (3a) and (3b) (which may be adopted singly or as a mixture of two or more kinds thereof) .

Rf⁵-(OCF₂CF₂CF₂) _{b"}-Rf⁶ ... (3a)

Rf⁵- (OCF₂CF₂CF₂CF₂) _{a"}- (OCF₂CF₂CF₂) _{b"}- (OCF₂CF₂) _{c"}- (OCF₂) _{d"}-Rf⁶ ... (3b)

In these formulae, Rf⁵ and Rf⁶ are as described above; in formula (3a), b" is an integer of 1 or more and 100 or less; and, in formula (3b), a" and b" are each independently an integer of 0 or more and 30 or less, c" and d" are each independently an integer of 1 or more and 300 or less. The occurrence order of the respective repeating units enclosed in parentheses accompanied by a subscript a", b", c" or d" is not limited in the formula.

From another viewpoint, the fluorine-containing oil may be a compound of general formula Rf³-F (wherein Rf³ is a C₅-₁₆ perfluoroalkyl group). The fluorine-containing oil may be a chlorotrifluoroethylene oligomer.

The fluorine-containing oil may have an average molecular weight of 500 to 10,000. The molecular weight of the fluorine-containing oil may be measured using GPC.

The fluorine-containing oil may be contained in an amount of, for example, 0 to 50 mass%, preferably 0 to 30 mass%, more preferably 0 to 5 mass% based on the composition of the present disclosure. In one embodiment, the composition of the present disclosure is substantially free of the fluorine-containing oil. Being substantially free of the fluorine-containing oil means that the fluorine-containing oil is not contained at all, or an extremely small amount of the fluorine-containing oil may be contained.

In one embodiment, the average molecular weight of the fluorine-containing oil may be greater than the average molecular weight of the fluoropolyether group-containing compound. With such average molecular weights, better friction durability and surface lubricity can be obtained particularly when a surface-treating layer is formed by a vacuum deposition method.

In one embodiment, the average molecular weight of the fluorine-containing oil may be smaller than the average molecular weight of the fluoropolyether group-containing compound. With such average molecular weights, it is possible to form a cured product having high friction durability and high surface lubricity while suppressing deterioration of the transparency of a surface-treating layer obtained from the compound.

The fluorine-containing oil contributes to increasing the surface lubricity of a layer formed of the composition of the present disclosure.

For example, the silicone oil may be linear or cyclic silicone oil having 2,000 or less siloxane bonds. The linear silicone oil may be so-called straight silicone oil or modified silicone oil. Examples of the straight silicone oil include dimethyl silicone oil, methyl phenyl silicone oil, and methyl hydrogen silicone oil. Examples of the modified silicone oil include those obtained by modifying straight silicone oil with alkyl, aralkyl, polyether, higher fatty acid ester, fluoroalkyl, amino, epoxy, carboxyl, alcohol, or the like. Examples of the cyclic silicone oil include cyclic dimethylsiloxane oil.

In the composition of the present disclosure (e.g., a surface-treating agent), such silicone oil may be contained in an amount of, for example, 0 to 300 parts by mass, and preferably 50 to 200 parts by mass, with respect to total 100 parts by mass of the fluoropolyether group-containing silane compound of the present disclosure (in the case of two or more kinds, the total thereof, and the same applies below).

Silicone oil contributes to increasing the surface lubricity of the surface-treating layer.

Examples of the catalyst include acids (such as acetic acid and trifluoroacetic acid), bases (such as ammonia, triethylamine, and diethylamine), and transition metals (such as Ti, Ni, and Sn).

The catalyst promotes hydrolysis and dehydrative condensation of the fluoropolyether group-containing silane compound of the present disclosure, and promotes formation of a layer formed of the composition (e.g., a surface-treating agent) of the present disclosure.

Examples of other components include, in addition to those described above, tetraethoxysilane, methyltrimethoxysilane, 3-aminopropyltrimethoxysilane, 3-glycidoxypropyltrimethoxysilane, and methyltriacetoxysilane.

The composition of the present disclosure can be used as a surface-treating agent for surface treatment of a base material.

The surface-treating agent of the present disclosure can be formed into a pellet by impregnating a porous material, for example, a porous ceramic material or a metal fiber for example that obtained by solidifying a steel wool in a cotton-like form, therewith. Such pellets can be used in, for example, vacuum deposition.

Below, the article of the present disclosure will now be described.

The article of the present disclosure comprises a base material and a layer (surface-treating layer) on a surface of the base material, the layer being formed of a surface-treating agent comprising a fluoropolyether group-containing silane compound according to the present disclosure.

The base material usable in the present disclosure may be composed of any suitable material such as glass, resin (which may be natural or synthetic resin such as a commonly used plastic material, and may be in the form of a plate, a film, or the like), metal, ceramics, semiconductors (such as silicon and germanium), fiber (such as woven fabric and nonwoven fabric), fur, leather, wood, pottery, stone, and building materials.

For example, when the article to be produced is an optical member, the material constituting the surface of the base material may be a material for an optical member, such as glass or a transparent plastic. When the article to be produced is an optical member, some layer (or film) such as a hard coat layer or an antireflection layer may be formed on the surface (the outermost layer) of the base material. The antireflection layer may be any of a single-layer antireflection layer and a multi-layer antireflection layer. Examples of inorganic substances usable in the antireflection layer include SiO₂, SiO, ZrO₂, TiO₂, TiO, Ti₂O₃, Ti₂O₅, Al₂O₃, Ta₂O₅, CeO₂, MgO, Y₂O₃, SnO₂, MgF₂, and WO₃. One of these inorganic substances may be used singly, or two or more may be used in combination (e.g., as a mixture). In the case of a multi-layer antireflection layer, SiO₂ and/or SiO is preferably used in the outermost layer thereof. When the article to be produced is an optical glass component for a touch panel, a part of the surface of the base material (glass) may have a transparent electrode such as a thin film in which indium tin oxide (ITO), indium zinc oxide, or the like is used. The base material, according to its specific configuration or the like, may have an insulating layer, an adhesive layer, a protecting layer, a decorated frame layer (I-CON), an atomizing film layer, a hard coating layer, a polarizing film, a phase difference film, a liquid crystal display module, or the like.

The shape of the base material is not limited. The surface region of the base material on which a surface-treating layer is to be formed may be at least a part of the base material surface, and may be suitably determined according to the application, specific configurations, and the like of an article to be produced.

The base material, or at least the surface portion thereof, may be composed of a material originally having a hydroxyl group. Examples of the material include glass as well as metal (in particular, base metal) wherein a natural oxidized film or a thermal oxidized film is formed on the surface, ceramics, and semiconductors. Alternatively, when the base material has an insufficient amount of a hydroxyl group or when the base material originally does not have a hydroxyl group as in resin and the like, a pre-treatment may be performed on the base material to thereby introduce or increase a hydroxyl group on the surface of the base material. Examples of such a pre-treatment include a plasma treatment (e.g., corona discharge) and ion beam irradiation. The plasma treatment can be suitably utilized to not only introduce or increase a hydroxyl group on the base material surface, but also clean the base material surface (remove foreign matter and the like). Another example of such a pre-treatment includes a method wherein a monolayer of a surface adsorbent having a carbon-carbon unsaturated bonding group is formed on the base material surface by a LB method (a Langmuir-Blodgett method), a chemical adsorption method, or the like beforehand, in the form of monomolecular film, and thereafter cleaving the unsaturated bond under an atmosphere containing oxygen, nitrogen, or the like.

Alternatively, the base material, or at least the surface portion thereof, may be composed of a material comprising other reactive group such as a silicone compound having one or more Si-H group or alkoxysilane.

Then, a layer of the surface-treating agent of the present disclosure is formed on the surface of the base material, this layer is post-treated as necessary, and thereby a layer is formed from the surface-treating agent of the present disclosure.

The layer of the surface-treating agent of the present disclosure can be formed by applying the above composition on the surface of the base material such that the composition coats the surface. The coating method is not limited. For example, a wet coating method and a dry coating method can be used.

Examples of the wet coating method include dip coating, spin coating, flow coating, spray coating, roll coating, gravure coating, and similar methods.

Examples of the dry coating method include deposition (usually, vacuum deposition), sputtering, CVD, and similar methods. Specific examples of the deposition method (usually, a vacuum deposition method) include resistive heating, highfrequency heating using electron beam, microwave or the like, ion beam, and similar methods. Specific examples of the CVD method include plasma-CVD, optical CVD, thermal CVD, and similar methods.

Furthermore, coating by an atmospheric pressure plasma method can be performed.

When using the wet coating method, the surface-treating agent of the present disclosure can be applied to the base material surface after being diluted with a solvent. From the viewpoint of the stability of the composition of the present disclosure and the volatility of solvents, the following solvents are preferably used: perfluoroaliphatic hydrocarbons having 5 to 12 carbon atoms (such as perfluorohexane, perfluoromethylcyclohexane, and perfluoro-1,3-dimethylcyclohexane); polyfluoroaromatic hydrocarbons (such as bis(trifluoromethyl)benzene); polyfluoroaliphatic hydrocarbons (such as C₆F₁₃CH₂CH₃ (such as Asahiklin (registered trademark) AC-6000 manufactured by Asahi Glass Co., Ltd.), and 1,1,2,2,3,3,4-heptafluorocyclopentane (such as Zeorora (registered trademark) H manufactured by Zeon Corporation)); hydrofluoroether (HFE) (such as alkyl perfluoroalkyl ethers, where the perfluoroalkyl group and the alkyl group may be linear or branched (such as perfluoropropylmethyl ether (C₃F₇OCH₃) (such as Novec (trademark) 7000 manufactured by Sumitomo 3M Limited), perfluorobutyl methyl ether (C₄F₉OCH₃) (such as Novec (trademark) 7100 manufactured by Sumitomo 3M Limited), perfluorobutyl ethyl ether (C₄F₉OC₂H₅) (such as Novec (trademark) 7200 manufactured by Sumitomo 3M Limited), and perfluorohexyl methyl ether (C₂F₅CF(OCH₃)C₃F₇) (such as Novec (trademark) 7300 manufactured by Sumitomo 3M Limited), or CF₃CH₂OCF₂CHF₂ (such as Asahiklin (registered trademark) AE-3000 manufactured by Asahi Glass Co., Ltd.)). One of these solvents can be used singly, or two or more can be used as a mixture. In particular, hydrofluoroether is preferable, and perfluorobutyl methyl ether (C₄F₉OCH₃) and/or perfluorobutyl ethyl ether (C₄F₉OC₂H₅) is particularly preferable.

When using the dry coating method, the surface-treating agent of the present disclosure may be directly subjected to the dry coating method, or may be diluted with the above solvent before being subjected to the dry coating method.

A layer of the surface-treating agent is preferably formed such that the surface-treating agent of the present disclosure coexists in the layer with a catalyst for hydrolysis and dehydrative condensation. Conveniently, in the case of a wet coating method, the surface-treating agent of the present disclosure is diluted with a solvent, and then, immediately before application to the base material surface, a catalyst may be added to the diluted solution of the surface-treating agent of the present disclosure. In the case of a dry coating method, the surface-treating agent of the present disclosure to which a catalyst has been added is directly used to a deposition (usually vacuum deposition) treatment, or a pellet-like material may be used to a deposition (usually vacuum deposition) treatment, wherein the pellets is obtained by impregnating a porous body of metal such as iron or copper with the surface-treating agent of the present disclosure to which the catalyst has been added.

The catalyst may be any suitable acid or base. The acid catalyst may be, for example, acetic acid, formic acid, or trifluoroacetic acid. The base catalyst may be, for example, ammonia or an organic amine.

In the above-described manner, a layer derived from the surface-treating agent of the present disclosure is formed on the surface of the base material, and the article of the present disclosure is produced. The layer thus obtained has both high surface lubricity and high friction durability. The layer may have not only high friction durability but also have, depending on the composition of the surface-treating agent used, water-repellency, oil-repellency, antifouling properties (e.g., preventing grime such as fingerprints from adhering), waterproof properties (preventing water from entering electronic components and the like), surface lubricity (or lubricity, for example, such as removability by wiping of grim such as fingerprints, and excellent tactile sensations to the fingers), and the like, and may be suitably used as a functional thin film.

That is, the present disclosure further relates to an optical material having the surface-treating layer at the outermost layer.

The optical material preferably includes a wide variety of optical materials in addition to optical materials relating to displays and the like as exemplified below: for example, displays such as cathode ray tubes (CRTs; e.g., PC monitors), liquid crystal displays, plasma displays, organic EL displays, inorganic thin-film EL dot matrix displays, rear projection displays, vacuum fluorescent displays (VFDs), field emission displays (FEDs); protective plates for such displays; and those obtained by performing an antireflection film treatment on their surfaces.

The article having a layer obtained according to the present disclosure may be, but is not limited to, an optical member. Examples of the optical member include lenses of glasses or the like; front surface protective plates, antireflection plates, polarizing plates, and anti-glare plates for displays such as PDPs and LCDs; touch panel sheets for devices such as mobile phones and personal digital assistants; disc surfaces of optical discs such as Blu-ray (registered trademark) discs, DVD discs, CD-Rs, and MOs; optical fibers; and display surfaces of watches and clocks.

The article having a layer obtained according to the present disclosure may be medical equipment or a medical material.

The thickness of the layer is not limited. The thickness of the layer in the case of an optical member is in the range of 1 to 50 nm, 1 to 30 nm, and preferably 1 to 15 nm, from the viewpoint of optical performance, surface lubricity, friction durability, and antifouling properties.

The article obtained by using the composition of the present disclosure (e.g., a surface-treating agent) has been described in detail above. The application and the method for using the fluoropolyether group-containing silane compound of the present disclosure or the composition containing the fluoropolyether group-containing silane compound, and the method for producing an article, are not limited to those exemplified above.

### Examples

The surface-treating agent of the present invention will be described more specifically through the following Examples, but the present invention is not limited to these Examples. In the Examples, all chemical formulae shown below indicate average compositional features, and the occurrence order of the respective repeating units forming perfluoropolyether is arbitrary.

The chlorine ion concentration was measured by the analysis method described below.

### . Analysis method

### ion chromatography

For analysis of the chlorine ion concentration, chlorine ions were measured with an ion chromatograph apparatus, followed by determining the concentration by an external standard method.
Apparatus name: Dionex ICS-2100 (Thermo SCIENTIFIC)
Column: Dionex IonPac AS20
Temperature: 30°C
Flow rate: 1.0 mL/min
Detector: electrical conductivity

An ion concentration measurement sample was prepared by diluting a perfluoropolyether group-containing silane compound to 10 wt% with HFE 7300 manufactured by Novec, subsequently adding ultrapure water, and extracting chlorine ions into the aqueous layer.

### Synthetic Example 1

20 g of perfluoropolyether group-containing trichlorosilane compound (A) having trichlorosilane at the end as described below and 20 g of 1,3-bis(trifluoromethyl)benzene were added into a 100 mL four-neck flask equipped with a reflux condenser, a thermometer and a stirrer, and the mixture was stirred under nitrogen gas stream at 5°C for 30 minutes. Subsequently, 35.2 ml of a diethyl ether solution containing allyl magnesium bromide at 0.7 mol/L was added, and the mixture was then heated to room temperature, and stirred at this temperature for 10 hours. Thereafter, the reaction liquid was cooled to 5°C, 5 ml of methanol was added, and the mixture was then heated to room temperature, and filtered to remove insoluble substances. Subsequently, volatiles were distilled off under reduced pressure, non-volatile components were then diluted with perfluorohexane, and a cleaning operation with methanol (more specifically, an operation in which a fluoro-based compound is held in a perfluorohexane phase (fluorous phase) and a non-fluoro-based compound is separated and removed into a methanol phase (organic phase)) was carried out three times using a separatory funnel. Subsequently, volatiles were distilled off under reduced pressure to obtain 18 g of a product (B) containing the following perfluoropolyether group-containing allyl compound (B) having an allyl group at the end.

Perfluoropolyether group-containing trichlorosilane compound (A):

CF₃O (CF₂CF₂O) ₁₅ (CF₂O) ₁₆CF₂CH₂OCH₂CH₂CH₂SiCl₃

Perfluoropolyether group-containing allyl compound (B):

CF₃O (CF₂CF₂O) ₁₅ (CF₂O) ₁₆CF₂CH₂OCH₂CH₂CH₂Si (CH₂CH=CH₂) ₃

### Synthetic Example 2

15 g of the product (B) synthesized in Synthetic Example 1 and containing perfluoropolyether group-containing allyl compound (B) having an allyl group at the end, 15 g of 1,3-bis(trifluoromethyl)benzene, 0.05 g of triacetoxymethylsilane and 4.2 g of trichlorosilane were added into a 100 mL four-neck flask equipped with a reflux condenser, a thermometer and a stirrer, and the mixture was stirred under nitrogen gas stream at 5°C for 30 minutes. Subsequently, 0.15 ml of a xylene solution containing a Pt complex of 1,3-divinyl-1,1,3,3-tetramethyldisiloxane at 2% was added, and the mixture was then heated to 60°C, and stirred at this temperature for 5 hours. Thereafter, volatiles were distilled off under reduced pressure to obtain 16 g of a product (C) containing the following perfluoropolyether group-containing trichlorosilane compound (C) having trichlorosilane at the end.

Perfluoropolyether group-containing trichlorosilane compound (C):

CF₃O (CF₂CF₂O) ₁₅ (CF₂O) ₁₆CF₂CH₂OCH₂CH₂CH₂Si (CH₂CH₂CH₂SiCl₃) ₃

### Synthetic Example 3

16 g of the product (C) synthesized in Synthetic Example 2 and containing the perfluoropolyether group-containing trichlorosilane compound (C) having trichlorosilane at the end and 16 g of 1,3-bis(trifluoromethyl)benzene were added into a 100 mL four-neck flask equipped with a reflux condenser, a thermometer and a stirrer, and the mixture was stirred under nitrogen gas stream at 50°C for 30 minutes. Subsequently, a mixed solution of 1.04 g of methanol and 48 g of trimethyl orthoformate was added, and the mixture was then heated to 65°C, and stirred at this temperature for 3 hours. Thereafter, the reaction liquid was cooled to room temperature, and filtered to remove insoluble substances, and volatiles were distilled off under reduced pressure to obtain 16 g of a product (D) containing the following perfluoropolyether group-containing silane compound (D) having a trimethylsilyl group at the end.

Perfluoropolyether group-containing silane compound (D) :

CF₃O (CF₂CF₂O) ₁₅ (CF₂O) ₁₆CF₂CH₂OCH₂CH₂CH₂Si [CH₂CH₂CH₂Si (OCH₃) ₃ ] ₃

(The average compositional feature included 0.17 repeating units of (CF₂CF₂CF₂CF₂O) and 0.18 repeating units of (CF₂CF₂CF₂O), but these repeating units were omitted because the amounts thereof were very small.)

### Synthetic Example 4

21 g of perfluoropolyether group-containing trichlorosilane compound (E) having trichlorosilane at the end as described below and 21 g of 1,3-bis(trifluoromethyl)benzene were added into a 100 mL four-neck flask equipped with a reflux condenser, a thermometer and a stirrer, and the mixture was stirred under nitrogen gas stream at 50°C for 30 minutes. Subsequently, a mixed solution of 1.34 g of methanol and 64 g of trimethyl orthoformate was added, and the mixture was then heated to 65°C, and stirred at this temperature for 3 hours. Thereafter, the reaction liquid was cooled to room temperature, and filtered to remove insoluble substances, and volatiles were distilled off under reduced pressure to obtain 21 g of a product (F) containing the following perfluoropolyether group-containing silane compound (F) having a trimethylsilyl group at the end.

Perfluoropolyether group-containing trichlorosilane compound (E):

CF₃O (CF₂CF₂OCF₂CF₂CF₂CF₂O) ₃CF₂CF₂OCF₂CF₂CF₂CONHCH₂C (CH₂CH₂C H₂SiCl₃) ₃

Perfluoropolyether group-containing silane compound (F) :

CF₃O (CF₂CF₂OCF₂CF₂CF₂CF₂O) ₃CF₂CF₂OCF₂CF₂CF₂CONHCH₂C [CH₂CH₂C H₂Si (OCH₃) ₃] ₃

### Synthetic Example 5

16 g of perfluoropolyether group-containing trichlorosilane compound (G) having trichlorosilane at the end as described below and 16 g of 1,3-bis (trifluoromethyl) benzene were added into a 100 mL four-neck flask equipped with a reflux condenser, a thermometer and a stirrer, and the mixture was stirred under nitrogen gas stream at 50°C for 30 minutes. Subsequently, a mixed solution of 1.04 g of methanol and 48 g of trimethyl orthoformate was added, and the mixture was then heated to 65°C, and stirred at this temperature for 3 hours. Thereafter, the reaction liquid was cooled to room temperature, and filtered to remove insoluble substances, and volatiles were distilled off under reduced pressure to obtain 16 g of a product (H) containing the following perfluoropolyether group-containing silane compound (H) having a trimethylsilyl group at the end.

Perfluoropolyether group-containing trichlorosilane compound (G):

CF₃O(CF₂CF₂O)₁₅(CF₂O)₁₆CF₂C(OCH₂CH₂CH₂SiCl₃)(CH₂CH₂CH₂SiCl₃ )₂

Perfluoropolyether group-containing silane compound (H) :

CF₃O(CF₂CF₂O)₁₅(CF₂O)₁₆CF₂C[OCH₂CH₂CH₂Si(OCH₃)₃][CH₂CH₂CH₂S i(OCH₃)₃]₂

(The average compositional feature included 0.17 repeating units of (CF₂CF₂CF₂CF₂O) and 0.18 repeating units of (CF₂CF₂CF₂O), but these repeating units were omitted because the amounts thereof were very small.)

### Example 1

5.0 g of the product (D) obtained in Synthetic Example 3 and containing the perfluoropolyether group-containing silane compound (D) was diluted with 13 g of perfluorohexane, 1.5 g of methanol was added, and a cleaning operation was carried out three times. Subsequently, the lower phase was concentrated to obtain 4.0 g of a perfluoropolyether group-containing silane composition (D'). The obtained composition (D') was analyzed by the ion chromatography, and the result showed that the chlorine ion concentration was 0.3 ppm by mass in the HFE 7300-diluted solution at 10 wt%.

### Example 2

1.0 g of the product (D) obtained in Synthetic Example 3 and containing the perfluoropolyether group-containing silane compound (D) was diluted with 4.0 g of perfluorohexane, metal zinc powder was subsequently added at 3 wt%, and the mixture was stirred at room temperature for 2 hours. Subsequently, solid components were removed by filtration, and the filtrate was concentrated. The thus-obtained nonvolatile components were diluted with 9.0 g of HFE 7300 manufactured by NOVEC, activated carbon Shirasagi A manufactured by Osaka Gas Chemicals Co., Ltd. was added at 3 wt%, and the mixture was stirred at room temperature for 2 hours. Thereafter, solid components were removed by filtration, and the filtrate was concentrated to obtain 1.0 g of a perfluoropolyether group-containing silane composition (D"). The obtained composition (D") was analyzed by the ion chromatography, and the result showed that the chlorine ion concentration was 0.7 ppm by mass in the HFE 7300-diluted solution at 10 wt%.

### Example 3

5.0 g of the product (F) obtained in Synthetic Example 4 and containing the perfluoropolyether group-containing silane compound (F) was cleaned in the same manner as in Example 1. The obtained composition (F') was analyzed by the ion chromatography, and the result showed that the chlorine ion concentration was 0.2 ppm by mass in the HFE 7300-diluted solution at 10 wt%.

### Example 4

1.0 g of the product (F) obtained in Synthetic Example 4 and containing the perfluoropolyether group-containing silane compound (F) was treated with metal zinc powder and activated carbon in the same manner as in Example 2. The obtained composition (F") was analyzed by the ion chromatography, and the result showed that the chlorine ion concentration was 0.7 ppm by mass in the HFE 7300-diluted solution at 10 wt%.

### Example 5

5.0 g of the product (H) obtained in Synthetic Example 5 and containing the perfluoropolyether group-containing silane compound (H) was cleaned in the same manner as in Example 1. The obtained composition (H') was analyzed by the ion chromatography, and the result showed that the chlorine ion concentration was 0.2 ppm by mass in the HFE 7300-diluted solution at 10 wt%.

### Example 6

1.0 g of the product (H) obtained in Synthetic Example 5 and containing the perfluoropolyether group-containing silane compound (H) was treated with metal zinc powder and activated carbon in the same manner as in Example 2. The obtained composition (H") was analyzed by the ion chromatography, and the result showed that the chlorine ion concentration was 0.8 ppm by mass in the HFE 7300-diluted solution at 10 wt%.

**[Table 1]**

| Example | Treatment method | Chlorine after treatment Ion concentration (ppm by mass) |
|---|---|---|
| Example 1 | Methanol cleaning | 0.3 |
| Example 2 | Zinc-activated carbon treatment | 0.7 |
| Example 3 | Methanol cleaning | 0.2 |
| Example 4 | Zinc-activated carbon treatment | 0.7 |
| Example 5 | Methanol cleaning | 0.2 |
| Example 6 | Zinc-activated carbon treatment | 0.8 |

### Comparative Example 1

15 g of the product (B) synthesized in Synthetic Example 1 and containing perfluoropolyether group-containing allyl compound (B) having an allyl group at the end, 15 g of 1,3-bis(trifluoromethyl)benzene, 3.0 g of trimethoxysilane and 1.5 × 10⁻² g of a toluene solution of a chloroplatinic acid/vinyl siloxane complex were added into a 100 mL four-neck flask equipped with a reflux condenser, a thermometer and a stirrer, and the mixture was stirred under nitrogen gas stream at 80°C for 12 hours. Thereafter, volatiles were distilled off under reduced pressure to obtain 15 g of a product (P) containing the following perfluoropolyether group-containing silane compound (D) having a trimethylsilyl group at the end. The obtained product (P) was analyzed by the ion chromatography, and the result showed that the chlorine ion concentration was less than 0.1 ppm by mass in the HFE 7300-diluted solution at 10 wt%.

### Comparative Example 2

10 g of a perfluoropolyether group-containing allyl compound (I) having an allyl group at the end as described below, 10 g of 1,3-bis(trifluoromethyl)benzene, 2.0 g of trimethoxysilane and 1.0 × 10⁻² g of a toluene solution of a chloroplatinic acid/vinyl siloxane complex were added into a 100 mL four-neck flask equipped with a reflux condenser, a thermometer and a stirrer, and the mixture was stirred under nitrogen gas stream at 80°C for 12 hours. Thereafter, volatiles were distilled off under reduced pressure to obtain 15 g of a product (Q) containing the following perfluoropolyether group-containing silane compound (F) having a trimethylsilyl group at the end. The obtained product (Q) was analyzed by the ion chromatography, and the result showed that the chlorine ion concentration was less than 0.1 ppm by mass in the HFE 7300-diluted solution at 10 wt%.

Perfluoropolyether group-containing allyl compound (I) :

CF₃O(CF₂CF₂OCF₂CF₂CF₂CF₂O)₃CF₂CF₂OCF₂CF₂CF₂CONHCH₂C(CH₂CH=C H₂)₃

### Comparative Example 3

10 g of a perfluoropolyether group-containing allyl compound (J) having an allyl group at the end as described below, 10 g of 1,3-bis(trifluoromethyl)benzene, 2.0 g of trimethoxysilane and 1.0 × 10⁻² g of a toluene solution of a chloroplatinic acid/vinyl siloxane complex were added into a 100 mL four-neck flask equipped with a reflux condenser, a thermometer and a stirrer, and the mixture was stirred under nitrogen gas stream at 80°C for 12 hours. Thereafter, volatiles were distilled off under reduced pressure to obtain 15 g of a product (R) containing the following perfluoropolyether group-containing silane compound (H) having a trimethylsilyl group at the end. The obtained product (R) was analyzed by the ion chromatography, and the result showed that the chlorine ion concentration was less than 0.1 ppm by mass in the HFE 7300-diluted solution at 10 wt%.

Perfluoropolyether group-containing allyl compound (J) :

CF₃O(CF₂CF₂O)₁₅(CF₂O)₁₆CF₂C(OCH₂CH=CH₂)(CH₂CH=CH₂)₂

### Comparative example 4

An untreated article of the product (D) obtained in Synthetic Example 3 was prepared. The chlorine ion concentration of untreated product (D) was measured by the ion chromatography, and the result showed that the chlorine ion concentration was 6.7 ppm by mass in the HFE 7300-diluted solution at 10 wt%.

### Comparative Example 5

An untreated article of the product (F) obtained in Synthetic Example 4 was prepared. The chlorine ion concentration of untreated product (F) was measured by the ion chromatography, and the result showed that the chlorine ion concentration was 5.5 ppm by mass in the HFE 7300-diluted solution at 10 wt%.

### Comparative Example 6

An untreated article of the product (H) obtained in Synthetic Example 5 was prepared. The chlorine ion concentration of untreated product (H) was measured by the ion chromatography, and the result showed that the chlorine ion concentration was 8.7 ppm by mass in the HFE 7300-diluted solution at 10 wt%.

**[Table 2]**

| Comparative Example | Chlorine ion concentration (ppm by mass) |
|---|---|
| Comparative Example 1 | less than 0.1 |
| Comparative Example 2 | less than 0.1 |
| Comparative Example 3 | less than 0.1 |
| Comparative Example 4 | 6.7 |
| Comparative Example 5 | 5.5 |
| Comparative Example 6 | 8.7 |

### (Test Examples)

### • Friction durability evaluation

The diluted solutions of the perfluoropolyether group-containing silane compounds of Examples 1 to 6 and Comparative Examples 1 to 3 at 10 wt% in HFE 7300 were used as surface-treating agents to form surface-treating layers. Specifically, the surface-treating agent was vacuumdeposited on a chemically tempered glass ("Gorilla" glass, manufactured by Corning Incorporated, thickness 0.7 mm). As treatment conditions in vacuum deposition, the pressure was set to 3.0 × 10⁻³ Pa, a 7 nm silicon dioxide film was formed on a surface of the chemically tempered glass, and subsequently, 2 mg of the surface-treating agent (containing 0.2 mg of the perfluoropolyether group-containing silane compound) was deposited per sheet of the chemically tempered glass (55 mm × 100 mm). Thereafter, the chemically tempered glass with a deposited film was left to stand in an atmosphere at a temperature of 20°C and a humidity of 65% for 24 hours.

The friction durability of the surface-treating layer formed on the base material surface as described above was evaluated by a pencil-eraser durability test. Specifically, a sample article provided with a surface-treating layer was horizontally placed, a pencil-eraser (KESHI-70 manufactured by KOKUYO Co., Ltd., planar dimension 1 cm × 1.6 cm) was brought into contact with a surface of the surface-treating layer, a load of 500 gf was applied thereto, and, thereafter, with the load being applied, the pencil-eraser was moved back and forth at a speed of 20 mm/sec. The static water contact angle (degrees) was measured every 500 round trips. The evaluation was discontinued when the measured contact angle was less than 100 degrees. Tables 3 to 5 show the number of round trips when the contact angle eventually exceeded 100 degrees.

### • Perfluoropolyether group-containing silane compound (D)

**[Table 3]**

| | Chlorine ion concentration (ppm by mass) | Pencil-eraser durability (number of times) |
|---|---|---|
| Comparative Example 1 | less than 0.1 | 3000 |
| Example 1 | 0.3 | 5000 |
| Example 2 | 0.7 | 4000 |
| Comparative Example 2 | 6.7 | 2000 |

### • Perfluoropolyether group-containing silane compound (F):

**[Table 4]**

| | Chlorine ion concentration (ppm by mass) | Pencil-eraser durability (number of times) |
|---|---|---|
| Comparative Example 3 | less than 0.1 | 1500 |
| Example 3 | 0.2 | 3000 |
| Example 4 | 0.7 | 2000 |
| Comparative Example 4 | 5.5 | 1000 |

### • Perfluoropolyether group-containing silane compound (H):

**[Table 5]**

| | Chlorine ion concentration (ppm by mass) | Pencil-eraser durability (number of times) |
|---|---|---|
| Comparative Example 5 | less than 0.1 | 2000 |
| Example 5 | 0.2 | 4000 |
| Example 6 | 0.8 | 3000 |
| Comparative Example 6 | 8.7 | 1500 |

The above results reveal that when a composition with the chlorine ion concentration being within the range specified in the present disclosure is used, higher friction durability can be obtained. While the present disclosure is not restricted by any theory, it is thought that if the chlorine ion concentration is more than 1.0 ppm by mass, the stability of the methoxysilane moiety is deteriorated, and the number of reaction points with the base material decreases, so that the friction durability of the surface-treating layer is deteriorated. It is thought that when the chlorine ion concentration is 0.1 ppm by mass or more and 1.0 ppm by mass or less, a very small amount of chlorine ion components act as a catalyst during reaction with glass, so that adhesion is improved, leading to enhancement of friction durability. Further, it is thought that when the chlorine ion concentration is less than 0.1 ppm by mass, a catalyst effect cannot be obtained, and adhesion decreases, so that the friction durability is deteriorated.

### Industrial Applicability

The surface-treating agent of the present disclosure can be suitably used to form a surface-treating layer on surfaces of a variety of base materials, particularly surfaces of optical members which are required to have permeability.

## Claims

1. A surface-treating agent comprising at least one fluoropolyether group-containing compound of the following formula (1) or (2):
R^{F1}_{α} - X^{A} - R^{Si}_{β} (1)
R^{Si}_{γ} - X^{A} - R^{F2} - X^{A} - R^{Si}_{γ} (2)
wherein
R^{F1} is each independently at each occurrence Rf¹-R^{F}-O_{q}-;
R^{F2} is -Rf²ₚ-R^{F}-O_{q}-;
Rf¹ is each independently at each occurrence a C₁₋₁₆ alkyl group optionally substituted with one or more fluorine atoms;
Rf² is a C₁₋₆ alkylene group optionally substituted with one or more fluorine atoms;
R^{F} is each independently at each occurrence a divalent fluoropolyether group;
p is 0 or 1;
q is each independently at each occurrence 0 or 1;
R^{Si} is each independently at each occurrence a monovalent group containing a Si atom to which a hydroxyl group, a hydrolyzable group, a hydrogen atom or a monovalent organic group is bonded;
at least one R^{Si} is a monovalent group containing a Si atom to which a hydroxyl group or a hydrolyzable group is bonded;
X^{A} is each independently a single bond or a di- to decavalent organic group;
α is an integer of 1 to 9;
β is an integer of 1 to 9; and
γ is each independently an integer of 1 to 9, and
a chlorine ion,
wherein a chlorine ion concentration in the surface-treating agent is 0.1 ppm by mass or more and 1.0 ppm by mass or less.

2. The surface-treating agent according to claim 1, wherein Rf¹ is each independently at each occurrence a C₁₋₁₆ perfluoroalkyl group.

3. The surface-treating agent according to claim 1 or 2, wherein Rf² is each independently at each occurrence a C₁₋₆ perfluoroalkylene group.

4. The surface-treating agent according to any one of claims 1 to 3, wherein R^{F} is each independently at each occurrence a group of the formula:
-(OC₆F₁₂)ₐ-(OC₅F₁₀)_{b}-(OC₄F₈)_{c}-(OC₃R^{Fa}₆)_{d}-(OC₂F₄)ₑ-(OCF₂)_{f}-
wherein R^{Fa} is each independently at each occurrence a hydrogen atom, a fluorine atom or a chlorine atom; and
a, b, c, d, e and f are each independently an integer of 0 to 200, the sum of a, b, c, d, e and f is 1 or more, and the occurrence order of the respective repeating units enclosed in parentheses provided with a, b, c, d, e or f is not limited in the formula.

5. The surface-treating agent according to claim 4, wherein R^{Fa} is a fluorine atom.

6. The surface-treating agent according to any one of claims 1 to 5, wherein R^{F} is each independently at each occurrence a group of the following formula (f1), (f2), (f3), (f4) or (f5):
-(OC₃F₆)_{d}- (f1) :
wherein d is an integer of 1 to 200;
-(OC₄F₈)_{c}-(OC₃F₆)_{d}-(OC₂F₄)ₑ-(OCF₂)_{f}- (f2) :
wherein c and d are each independently an integer of 0 to 30;
e and f are each independently an integer of 1 to 200;
the sum of c, d, e, and f is an integer of 10 to 200; and
the occurrence order of the respective repeating units enclosed in parentheses accompanied by a subscript c, d, e, or f is not limited in the formula;
-(R⁶-R⁷)_{g}- (f3):
wherein R⁶ is OCF₂ or OC₂F₄;
R⁷ is a group selected from OC₂F₄, OC₃F₆, OC₄F₈, OC₅F₁₀, and OC₆F₁₂, or is a combination of two or three groups selected from these groups; and
g is an integer of 2 to 100;
-(OC₆F₁₂)ₐ-(OC₅F₁₀)_{b}-(OC₄F₈)_{c}-(OC₃F₆)_{d}-(OC₂F₄)ₑ-(OCF₂)_{f}- (f4) :
wherein e is an integer of 1 or more and 200 or less, a, b, c, d, and f are each independently an integer of 0 or more and 200 or less, the sum of a, b, c, d, e, and f is at least 1, and the occurrence order of the respective repeating units enclosed in parentheses provided with a, b, c, d, e or f is not limited in the formula; and
-(OC₆F₁₂)ₐ-(OC₅F₁₀)_{b}-(OC₄F₈)_{c}-(OC₃F₆)_{d}-(OC₂F₄)ₑ-(OCF₂)_{f} (f5) :
wherein f is an integer of 1 or more and 200 or less, a, b, c, d, and e are each independently an integer of 0 or more and 200 or less, the sum of a, b, c, d, e, and f is at least 1, and the occurrence order of the respective repeating units enclosed in parentheses provided with a, b, c, d, e or f is not limited in the formula.

7. The surface-treating agent according to any one of claims 1 to 6, wherein R^{Si} is a group of the following formula (S1), (S2), (S3) or (S4): 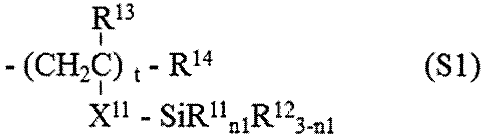
**-**SiR¹¹ₙ₁R¹²₃₋ₙ₁ (S2)
**-**SiR^{a1}ₖ₁R^{b1}₁₁R^{c1}ₘ₁ (S3)
**-**CR^{d1}ₖ₂R^{e1}₁₂R^{f1}ₘ₂ (S4)
wherein
R¹¹ is each independently at each occurrence a hydroxyl group or a hydrolyzable group;
R¹² is each independently at each occurrence a hydrogen atom or a monovalent organic group;
n1 is each independently an integer of 0 to 3 for each (SiR¹¹ₙ₁R¹²₃₋ₙ₁) unit,
X¹¹ is each independently at each occurrence a single bond or a divalent organic group;
R¹³ is each independently at each occurrence a hydrogen atom or a monovalent organic group;
t is each independently at each occurrence an integer of 2 to 10;
R¹⁴ is each independently at each occurrence a hydrogen atom or a halogen atom;
R^{a1} is each independently at each occurrence -Z¹-SiR²¹p₁R²²q₁R²³ᵣ₁;
Z¹ is each independently at each occurrence an oxygen atom or a divalent organic group;
R²¹ is each independently at each occurrence -Z^{1'}-SiR^{21'}ₚ₁'R^{22'}_{q1}'R^{23'}_{r1'};
R²² is each independently at each occurrence a hydroxyl group or a hydrolyzable group;
R²³ is each independently at each occurrence a hydrogen atom or a monovalent organic group;
p1 is each independently at each occurrence an integer of 0 to 3;
q1 is each independently at each occurrence an integer of 0 to 3;
r1 is each independently at each occurrence an integer of 0 to 3;
Z^{1'} is each independently at each occurrence an oxygen atom or a divalent organic group;
R^{21'} is each independently at each occurrence -Z^{1"}-SiR^{22"}_{q1"}R^{23"}_{r1"};
R^{22'} is each independently at each occurrence a hydroxyl group or a hydrolyzable group;
R^{23'} is each independently at each occurrence a hydrogen atom or a monovalent organic group;
p1' is each independently at each occurrence an integer of 0 to 3;
q1' is each independently at each occurrence an integer of 0 to 3;
r1' is each independently at each occurrence an integer of 0 to 3;
Z^{1"} is each independently at each occurrence an oxygen atom or a divalent organic group;
R^{22"} is each independently at each occurrence a hydroxyl group or a hydrolyzable group;
R^{23"} is each independently at each occurrence a hydrogen atom or a monovalent organic group;
q1" is each independently at each occurrence an integer of 0 to 3;
r1" is each independently at each occurrence an integer of 0 to 3;
R^{b1} is each independently at each occurrence a hydroxyl group or a hydrolyzable group;
R^{c1} is each independently at each occurrence a hydrogen atom or a monovalent organic group;
k1 is each independently at each occurrence an integer of 0 to 3;
11 is each independently at each occurrence an integer of 0 to 3;
m1 is each independently at each occurrence an integer of 0 to 3;
R^{d1} is each independently at each occurrence -Z²-CR³¹ₚ₂R³²_{q2}R³³ᵣ₂;
Z² is each independently at each occurrence a single bond, an oxygen atom or a divalent organic group;
R³¹ is each independently at each occurrence -Z^{2'}-CR^{32'}_{q2'}R^{33'}_{r2'};
R³² is each independently at each occurrence -Z³-SiR³⁴ₙ₂R³⁵₃₋ₙ₂;
R³³ is each independently at each occurrence a hydrogen atom, a hydroxyl group, or a monovalent organic group;
p2 is each independently at each occurrence an integer of 0 to 3;
q2 is each independently at each occurrence an integer of 0 to 3;
r2 is each independently at each occurrence an integer of 0 to 3;
Z^{2'} is each independently at each occurrence a single bond, an oxygen atom or a divalent organic group;
R^{32'} is each independently at each occurrence -Z³-SiR³⁴ₙ₂R³⁵₃₋ₙ₂;
R^{33'} is each independently at each occurrence a hydrogen atom, a hydroxyl group, or a monovalent organic group;
q2' is each independently at each occurrence an integer of 0 to 3;
r2' is each independently at each occurrence an integer of 0 to 3;
Z³ is each independently at each occurrence a single bond, an oxygen atom or a divalent organic group;
R³⁴ is each independently at each occurrence a hydroxyl group or a hydrolyzable group;
R³⁵ is each independently at each occurrence a hydrogen atom or a monovalent organic group;
n2 is each independently at each occurrence an integer of 0 to 3;
R^{e1} is each independently at each occurrence -Z³-SiR³⁴ₙ₂R³⁵₃₋ₙ₂;
Rf¹ is each independently at each occurrence a hydrogen atom, a hydroxyl group, or a monovalent organic group;
k2 is each independently at each occurrence an integer of 0 to 3;
12 is each independently at each occurrence an integer of 0 to 3; and
m2 is each independently at each occurrence an integer of 0 to 3.

8. The surface-treating agent according to any one of claims 1 to 7, wherein each of α, β and γ is 1.

9. The surface-treating agent according to any one of claims 1 to 7, wherein X^{A} is each independently a trivalent organic group,
α is 1 and β is 2 or α is 2 and β is 1, and
γ is 2.

10. The surface-treating agent according to any one of claims 1 to 9, wherein the chlorine ion concentration in the surface-treating agent is 0.2 to 0.8 ppm by mass.

11. The surface-treating agent according to any one of claims 1 to 10, further comprising one or more other component selected from fluorine-containing oil, silicone oil and a catalyst.

12. The surface-treating agent according to any one of claims 1 to 11, further comprising a solvent.

13. The surface-treating agent according to any one of claims 1 to 12, which is used as an antifouling coating agent or a water-proof coating agent.

14. The surface-treating agent according to any one of claims 1 to 13, which is used for vacuum deposition.

15. A pellet comprising the surface-treating agent according to any one of claims 1 to 14.

16. An article comprising a base material and a layer which is formed on a surface of the base material from the surface-treating agent according to any one of claims 1 to 14.

17. The article according to claim 16, which is an optical member.
